(19)

Europäisches
Patentamt
European
Patent Office
Office européen
des brevets

(11) **EP 4 709 024 A1**

(12) **EUROPEAN PATENT APPLICATION**
published in accordance with Art. 153(4) EPC

(43) Date of publication:
**11.03.2026 Bulletin 2026/11**

(21) Application number: **24810014.1**

(22) Date of filing: **08.03.2024**

(51) International Patent Classification (IPC):
***H04W 74/0838*** *(2024.01)*

(52) Cooperative Patent Classification (CPC):
**H04W 72/044; H04W 74/00; H04W 74/0833;
H04W 74/0838**

(86) International application number:
**PCT/CN2024/080665**

(87) International publication number:
**WO 2024/239765 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.05.2023 CN 202310581489**

(71) Applicant: **Huawei Technologies Co., Ltd.
Shenzhen, Guangdong 518129 (CN)**

(72) Inventors:
• **SHI, Meng
Shenzhen, Guangdong 518129 (CN)**
• **LIAO, Shuri
Shenzhen, Guangdong 518129 (CN)**
• **DOU, Shengyue
Shenzhen, Guangdong 518129 (CN)**

(74) Representative: **Maiwald GmbH
Elisenhof
Elisenstraße 3
80335 München (DE)**

(54) **ACCESS OCCASION DETERMINATION METHOD AND COMMUNICATION APPARATUS**

(57) Embodiments of this application disclose an access occasion determining method and a communication apparatus, to enable a terminal device to determine an RO resource for the terminal device, to reduce overheads of the terminal device. Embodiments of this application provide an access occasion determining method, which may include: determining a first SSB in an $i^{th}$ round of SSB transmission in N rounds of SSB transmissions, where coverage areas of the $i^{th}$ round of SSB transmission and a $j^{th}$ round of SSB transmission in the N rounds of SSB transmissions are different, N, i, and j are integers, and i is not equal to j; and determining a first RO resource associated with the first SSB, where SSBs that have a same index in the $i^{th}$ round of SSB transmission and the $j^{th}$ round of SSB transmission are associated with different RO resources.

[FIG. 5]

Determine a first synchronization signal block SSB in an $i^{th}$ round of SSB transmission in N rounds of SSB transmissions, where coverage areas of the $i^{th}$ round of SSB transmission and a $j^{th}$ round of SSB transmission in the N rounds of SSB transmissions are different ⌐ 501

Determine a first RO resource associated with the first SSB, where SSBs that have a same index in the $i^{th}$ round of SSB transmission and the $j^{th}$ round of SSB transmission are associated with different RO resources ⌐ 502

EP 4 709 024 A1

## Description

This application claims priority to Chinese Patent Application No. 202310581489.5, filed with the China National Intellectual Property Administration on May 22, 2023 and entitled "ACCESS OCCASION DETERMINING METHOD AND COMMUNICATION APPARATUS", which is incorporated herein by reference in its entirety.

## TECHNICAL FIELD

This application relates to the field of communication technologies, and in particular, to an access occasion determining method and a communication apparatus.

## BACKGROUND

A synchronization signal/physical broadcast channel block (synchronization signal/physical broadcast channel block, SSB), which is also referred to as a synchronization signal block, is defined in a 5th generation (5th generation, 5G) communication system. The SSB includes a primary synchronization signal (primary synchronization signal, PSS), a secondary synchronization signal (secondary synchronization signal, SSS), and a physical broadcast channel (physical broadcast channel, PBCH).

A terminal device needs to search for a cell and obtain cell system information, to access a network. For example, the terminal device may search for the SSB to achieve downlink synchronization with a cell that broadcasts the SSB, and then the terminal device obtains system information (system information) of the cell, establishes a connection to the cell by using a random access procedure (random access procedure), and achieves uplink synchronization with the cell.

In a current 3GPP protocol, a network device controls a beam sweeping process and completes sending of SSBs associated with different beams. The terminal device determines a plurality of access occasions e.g. random access channel occasion (RO), based on the received SSB, and the terminal device attempts to initiate random access in the plurality of ROs. Consequently, this increases overheads of the terminal device.

## SUMMARY

Embodiments of this application provide an access occasion determining method and a communication apparatus, to enable a terminal device to determine an RO resource for the terminal device, to reduce overheads of the terminal device.

To resolve the foregoing technical problem, embodiments of this application provide the following technical solutions.

According to a first aspect, an embodiment of this application provides an access occasion determining method. The method may include: determining a first SSB in an $i^{th}$ round of SSB transmission in N rounds of SSB transmissions, where coverage areas of the $i^{th}$ round of SSB transmission and a $j^{th}$ round of SSB transmission in the N rounds of SSB transmissions are different, N, i, and j are integers, and i is not equal to j; and determining a first RO resource associated with the first SSB, where RO resources associated with SSBs that have a same index in the $i^{th}$ round of SSB transmission and the $j^{th}$ round of SSB transmission are different. Based on the foregoing technical solution, in the N rounds of SSB transmissions, SSBs that have the same index are associated with different RO resources, so that a terminal device can determine an RO resource for the terminal device, to reduce overheads of the terminal device.

In a possible implementation, a time interval between the first RO resource and the first SSB is less than or equal to a first threshold; and the first threshold is determined based on a configuration of a network device, or is predefined in a protocol. Based on the foregoing technical solution, to ensure access performance of UE, and ensure validity of an RO resource for sending a PRACH, a time interval between a first RO resource for sending the PRACH and the first SSB is less than or equal to the first threshold, so that access performance of the UE can be improved.

In a possible implementation, the first threshold includes at least one of the following: an SSB periodicity of the $i^{th}$ round of SSB transmission, or an association period between an SSB in the $i^{th}$ round of SSB transmission and an RO resource. Based on the foregoing technical solution, it can be ensured that a time interval between the selected RO resource and an optimal SSB is less than or equal to the SSB periodicity, or it can be ensured that a time interval between the selected RO resource and the optimal SSB is less than or equal to the association period, thereby improving access performance of the UE.

In a possible implementation, the first RO resource is a plurality of RO resources associated with the first SSB, and a time interval between each of the plurality of RO resources and the first SSB is less than or equal to a second threshold; and the second threshold is determined based on a configuration of the network device, or is predefined in a protocol. Based on the foregoing technical solution, to ensure access performance of the UE, when the first SSB is associated with a plurality of RO resources, each RO resource for sending the PRACH is valid. Therefore, the time interval between each of the plurality of RO resources used to send the PRACH and the first SSB is less than or equal to the second threshold, so that the access performance of the UE can be improved.

In a possible implementation, the second threshold includes at least one of the following: an integer multiple of the SSB periodicity of the $i^{th}$ round of SSB transmission, or an integer multiple of the association period between the SSB in the $i^{th}$ round of SSB transmission and the RO resource. Based on the foregoing technical solution, in this embodiment of this application, it can be ensured that a time interval between each of the plurality of selected RO resources and the optimal SSB is less than or equal to the integer multiple of the SSB periodicity, or it can be ensured that a time interval between each of the plurality of selected RO resources and the optimal SSB is less than or equal to the integer multiple of the association period, thereby improving access performance of the UE.

In a possible implementation, the first RO resource is different from a second RO resource, the second RO resource is associated with a second SSB in the $j^{th}$ round of SSB transmission, and the first SSB and the second SSB have a same index. Based on the foregoing technical solution, the first SSB and the second SSB belong to different rounds of SSB transmissions, but the first SSB and the second SSB have the same SSB index. After the second SSB in the $j^{th}$ round of SSB transmission is determined, the second RO resource associated with the second SSB may be determined. To avoid a conflict in RO resource allocation, the first RO resource may be configured to be different from the second RO resource.

In a possible implementation, the first SSB and the first RO resource meet the following relationship:

$$(T_{RO}\text{–}T_{SSB\#k}) \bmod (N*T_{period}) \leq T_{threshold}.$$

$T_{SSB\#k}$ represents a time unit in which the first SSB is located, k is an index of the first SSB, and k is an integer.

$T_{RO}$ represents a time unit in which the first RO resource is located.

$T_{RO}\text{-}T_{SSB\#k}$ represents a time interval between the first RO resource and the first SSB.

$T_{period}$ represents the SSB periodicity of the $i^{th}$ round of SSB transmission, or the association period between the SSB in the $i^{th}$ round of SSB transmission and the RO resource, and $N*T_{period}$ represents a sum of SSB periodicities of the N rounds of SSB transmissions, or a sum of association periods between SSBs and RO resources in the N rounds of SSB transmissions.

$T_{threshold}$ represents a third threshold, and the third threshold is determined based on a configuration of the network device, or is predefined in a protocol.

-    represents a subtraction operation, * represents a multiplication operation, mod represents a modulo operation, and $\leq$ represents being less than or equal to.

Based on the foregoing technical solution, a plurality of SSBs that have a same index (index) in different beam directions corresponding to a same RO resource can be distinguished. The terminal device may determine, based on the first SSB, a quantity N of SSB transmission rounds, and the SSB periodicity that are determined by the terminal device, a position of the RO resource for the terminal device.

In a possible implementation, determining the first RO resource associated with the first SSB includes:

determining, based on an association relationship between the N rounds of SSB transmissions and M RO resource groups, an RO resource group associated with the $i^{th}$ round of SSB transmission, where M is an integer; and
determining the first RO resource based on the RO resource group associated with the $i^{th}$ round of SSB transmission.

Based on the foregoing technical solution, because different rounds of SSB transmissions are associated with different RO resource groups, the terminal device can determine the RO resource for the terminal device, to reduce overheads of the terminal device.

In a possible implementation, the method further includes: determining, by using the following calculation formula, the $i^{th}$ round of SSB transmission to which the first SSB belongs:

$$\left\lfloor \frac{T_{SSB}}{T_{period}} \right\rfloor = i - 1, \text{ or } \left\lceil \frac{T_{SSB}}{T_{period}} \right\rceil = i.$$

i represents the $i^{th}$ round of SSB transmission in the N rounds of SSB transmissions.

$T_{SSB}$ represents a time unit in which the first SSB is located.

$T_{period}$ represents the SSB periodicity of the $i^{th}$ round of SSB transmission, or the association period between the SSB in the $i^{th}$ round of SSB transmission and the RO resource. $\left\lfloor \frac{T_{SSB}}{T_{period}} \right\rfloor$ represents a floor operation on $\frac{T_{SSB}}{T_{period}}$, and $\left\lceil \frac{T_{SSB}}{T_{period}} \right\rceil$ represents a ceiling operation on $\frac{T_{SSB}}{T_{period}}$.

Based on the foregoing technical solutions, in this embodiment of this application, by grouping SSBs and RO resources, each group of SSBs has a fixed relationship with a corresponding group of RO resources, so that the RO resources have a valid association with the SSBs. Alternatively, a valid RO resource associated with an SSB may be determined through calculation according to the foregoing calculation formula.

In a possible implementation, RO resources included in different RO resource groups in the M RO resource groups are different in at least one configuration parameter. Based on the foregoing technical solution, there is an association relationship between the N rounds of SSB transmissions and the M RO resource groups, and RO resources that belong to different RO resource groups in the M RO resource groups are different in at least one configuration parameter, so that an RO resource group to which an RO resource belongs can be determined based on the RO resource with a distinctive configuration parameter.

In a possible implementation, a configuration parameter used to determine the association relationship between the N rounds of SSB transmissions and the M RO resource groups is carried in system information. Based on the foregoing technical solution, the network device determines the configuration parameter used to determine the association relationship between the N rounds of SSB transmissions and the M RO resource groups, and then sends the configuration parameter to the terminal device by using the system information, so that the terminal device determines the association relationship between the N rounds of SSB transmissions and the M RO resource groups based on the received configuration parameter.

In a possible implementation, a value of N is carried in the system information.

In a possible implementation of the first aspect, the method may be performed by the terminal device, or may be performed by a component (for example, a chip or a circuit) of the terminal device. This is not limited herein. For ease of description, the following uses an example in which the method is performed by a terminal device for description.

In a possible implementation of the first aspect, the method may be performed by the network device, or may be performed by a component (for example, a chip or a circuit) of the network device. This is not limited herein. For ease of description, the following uses an example in which the method is performed by the network device for description.

According to a second aspect, a communication apparatus is provided. The communication apparatus includes a transceiver unit and a processing unit. The transceiver unit is configured to perform a receiving or sending action of a terminal device in the first aspect and the optional implementations of the first aspect. The processing unit is configured to perform a determining action in the first aspect and the optional implementations of the first aspect.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

Optionally, the transceiver may be a transceiver circuit. Optionally, the input/output interface may be an input/output circuit.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

According to a third aspect, a communication apparatus is provided, including a processor. The processor is coupled to a memory, and may be configured to execute instructions in the memory, to implement the method in any one of the possible implementations of the first aspect. Optionally, the communication apparatus further includes a memory. Optionally, the communication apparatus further includes a communication interface, and the processor is coupled to the communication interface.

According to a fourth aspect, a processor is provided, including an input circuit, an output circuit, and a processing circuit. The processing circuit is configured to: receive a signal by using the input circuit, and transmit a signal by using the output circuit, to enable the processor to perform the method in any one of the possible implementations of the first aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a fifth aspect, a processing apparatus is provided, including a processor and a memory. The processor is configured to read instructions stored in the memory, receive a signal through a receiver, and transmit a signal through a transmitter, to perform the method in any one of possible implementations of the first aspect.

Optionally, there are one or more processors, and there are one or more memories.

Optionally, the memory may be integrated with the processor, or the memory and the processor may be separately disposed.

In a specific implementation process, the memory may be a non-transitory (non-transitory) memory, such as a read-only memory (read only memory, ROM). The memory and the processor may be integrated into a same chip, or may be separately disposed on different chips. A type of the memory and a manner in which the memory and the processor are disposed are not limited in this embodiment of this application.

It should be understood that a related data exchange process, for example, sending an SSB, may be a process of outputting an SSB from the processor, and receiving an SSB may be a process of receiving an input SSB by the processor. Specifically, data output by the processor may be output to the transmitter, and input data received by the processor may be from the receiver. The transmitter and the receiver may be collectively referred to as a transceiver.

The processing apparatus in the fifth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a sixth aspect, a computer program product is provided. The computer program product includes a computer program (which may also be referred to as code or instructions). When the computer program is run, a computer is enabled to perform the method in any one of the possible implementations of the first aspect.

According to a seventh aspect, a computer-readable storage medium is provided. The computer-readable storage medium stores a computer program (which may also be referred to as code or instructions). When the computer program is run on a computer, the method in any one of the possible implementations of the first aspect is performed.

According to an eighth aspect, a communication system is provided, including the foregoing terminal device and network device.

The network device is configured to: perform N rounds of synchronization signal block SSB transmissions, where coverage areas of an $i^{th}$ round of SSB transmission and a $j^{th}$ round of SSB transmission in the N rounds of SSB transmissions are different, N, i, and j are integers, and i is not equal to j; and determine an RO resource associated with one or more SSBs in the N rounds of SSB transmissions, where SSBs that have a same index in the $i^{th}$ round of SSB transmission and the $j^{th}$ round of SSB transmission are associated with different RO resources.

The terminal device is configured to: receive a first synchronization signal block SSB in the $i^{th}$ round of SSB transmission in N rounds of SSB transmissions, where coverage areas of the $i^{th}$ round of SSB transmission and the $j^{th}$ round of SSB transmission in the N rounds of SSB transmissions are different, N, i, and j are integers, and i is not equal to j; and determine a first RO resource associated with the first SSB, where SSBs that have a same index in the $i^{th}$ round of SSB transmission and the $j^{th}$ round of SSB transmission are associated with different RO resources.

According to the foregoing technical solutions, it can be learned that embodiments of this application have the following advantages:

In embodiments of this application, the first SSB in the $i^{th}$ round of SSB transmission in the N rounds of SSB transmissions is first determined, where the coverage areas of the $i^{th}$ round of SSB transmission and the $j^{th}$ round of SSB transmission in the N rounds of SSB transmissions are different. Then, the first RO resource associated with the first SSB is determined, where SSBs that have the same index in the $i^{th}$ round of SSB transmission and the $j^{th}$ round of SSB transmission are associated with different RO resources. Therefore, the terminal device can determine, by using the first SSB, the first RO resource associated with the first SSB. In the N rounds of SSB transmissions, SSBs that have the same index are associated with different RO resources, so that the terminal device can determine the RO resource for the terminal device, to reduce overheads of the terminal device.

BRIEF DESCRIPTION OF DRAWINGS

FIG. 1 is a diagram of a communication system applicable to a method provided in embodiments of this application according to an embodiment of this application;

FIG. 2 is a diagram of an application scenario according to an embodiment of this application;

FIG. 3 is a diagram of another application scenario according to an embodiment of this application;

FIG. 4a is a diagram of an association relationship between an SSB and an RO according to an embodiment of this application;

FIG. 4b is a diagram of another association relationship between an SSB and an RO according to an embodiment of this application;

FIG. 4c is a diagram of an association period between an SSB and an RO resource according to an embodiment of this application;

FIG. 5 is a block flowchart of an access occasion determining method according to an embodiment of this application;

FIG. 6 is a block flowchart of interaction between a network device and a terminal device according to an embodiment of this application;

FIG. 7a is a diagram of SSBs associating with RO resources in an $i^{th}$ round of SSB transmission in N rounds of SSB transmissions according to an embodiment of this application;

FIG. 7b is a diagram of SSBs in an $i^{th}$ round of SSB transmission and SSBs in a $j^{th}$ round of SSB transmission in N rounds of SSB transmissions associating with RO resources according to an embodiment of this application;

FIG. 7c is a diagram of SSBs in an $i^{th}$ round of SSB transmission and SSBs in a $j^{th}$ round of SSB transmission in N rounds of SSB transmissions associating with RO resources according to an embodiment of this application;

FIG. 8 is a diagram of signaling interaction between a base station and a terminal according to an embodiment of this application;

FIG. 9a is a diagram of an association relationship between an SSB and an RO resource when a mapping cycle is equal to an SSB periodicity according to an embodiment of this application;

FIG. 9b is a diagram of another association relationship between an SSB and an RO resource when a mapping cycle is equal to an SSB periodicity according to an embodiment of this application;

FIG. 10a is a diagram of an association relationship between an SSB and an RO resource when a mapping cycle is greater than an SSB periodicity according to an embodiment of this application;

FIG. 10b is a diagram of another association relationship between an SSB and an RO resource when a mapping cycle is greater than an SSB periodicity according to an embodiment of this application;

FIG. 11 is a diagram of a communication apparatus according to an embodiment of this application;

FIG. 12 is a block diagram of a communication apparatus according to another embodiment of this application; and

FIG. 13 is a diagram of a chip system according to an embodiment of this application.

## DESCRIPTION OF EMBODIMENTS

The following describes embodiments of this application with reference to the accompanying drawings.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a 5th generation (5th generation, 5G) system, new radio (new radio, NR), a non-terrestrial network (non-terrestrial network, NTN), a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a sidelink (sidelink, SL) communication system, a machine-to-machine (machine-to-machine, M2M) communication system, an internet of things (Internet of things, IoT) communication system, a vehicle to everything (vehicle to everything, V2X) communication system, an uncrewed aerial vehicle (uncrewed aerial vehicle, UAV) communication system, or another communication system.

The terminal device in embodiments of this application may also be referred to as user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future communication system, or the like. This is not limited in embodiments of this application.

The network device in embodiments of this application may be any device having a wireless transceiver function. The device includes but is not limited to: an evolved node (evolved nodeB, eNB), a radio network controller (radio network controller, RNC), a NodeB (nodeB, NB), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), a gNB, a transmission point (TRP or TP), one or a group (including a plurality of antenna panels) of antenna panels of a base station in a 5G system, or may be a network node that forms a gNB or a transmission point, for example, a baseband unit (BBU) or a distributed unit (distributed unit, DU).

In some deployments, the network device in embodiments of this application may be a base station (for example, a gNB) in a radio access network (radio access network, RAN). For example, a RAN 100 may be an open access network (open RAN, O-RAN, or ORAN). The base station may be of a central unit (centralized unit, CU) and a DU spit architecture. The RAN may be connected to a core network (which, for example, may be a long term evolution (long term evolution, LTE) core network, or may be a 5G core network or the like). It may be understood that the base station is divided into the CU and the DU from a perspective of a logical function. The CU and the DU may be physically separated or deployed together. A plurality of DUs may share one CU. One DU may alternatively be connected to a plurality of CUs. The CU and the DU may be connected through an interface, for example, an F1 interface. The CU and the DU may be divided based on a protocol layer of a wireless network.

For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It may be understood that, division of processing functions of the CU and the DU based on the protocol layers is merely an example, and the processing functions of the CU and the DU may alternatively be divided in another manner. For example, the CU or the DU may have functions of more protocol layers through division. For example, the CU or the DU may alternatively have some processing functions of the protocol layers through division.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The following describes technical solutions in embodiments of this application with reference to accompanying drawings in embodiments of this application. In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural. In addition, in the descriptions of this application, "a plurality of" means two or more unless otherwise specified. "At least one of the following items (pieces)" or a similar expression thereof refers to any combination of these items, including any combination of singular items (pieces) or plural items (pieces). For example, at least one (piece) of a, b, or c may represent: a, b, c, a-b, a-c, b-c, or a-b-c, where a, b, and c may be singular or plural. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In this specification, claims, and the accompanying drawings of this application, the terms "first", "second", and the like are intended to distinguish between similar objects but do not necessarily indicate a specific order or sequence. It should be understood that the terms used in such way are interchangeable in proper circumstances, and this is merely a discrimination manner for describing objects having a same attribute in descriptions of embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

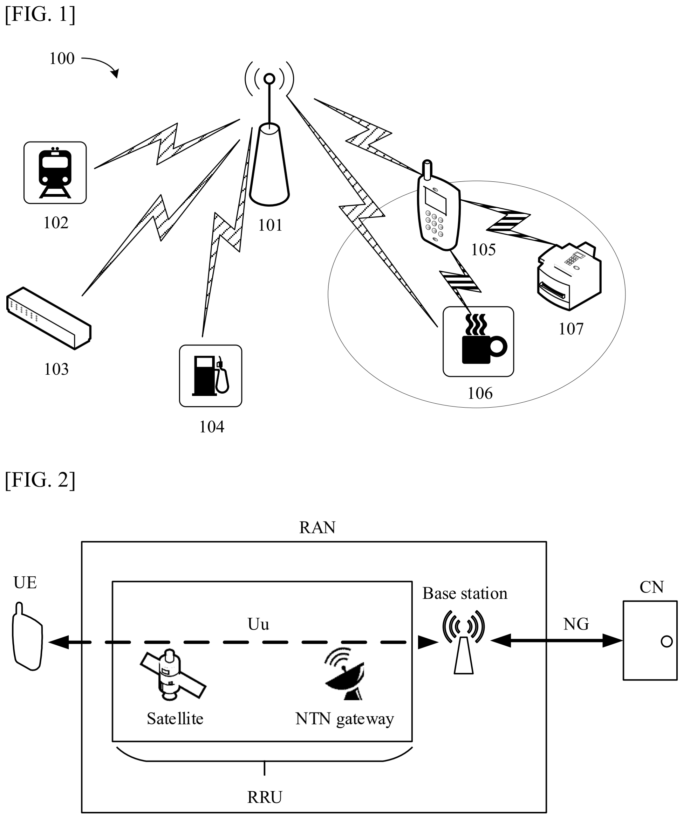

The following describes in detail, with reference to FIG. 1, a communication system applicable to a method provided in embodiments of this application.

FIG. 1 is a diagram of a communication system 100 applicable to a method according to an embodiment of this application. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographical area, and may communicate with a terminal device located in the coverage area. For example, the network device may send downlink data to the terminal device. Therefore, the network device 101 and the terminal devices 102 to 107 in FIG. 1 form a communication system.

Optionally, the terminal devices may directly communicate with each other. For example, direct communication between the terminal devices may be implemented by using an SL technology or the like. As shown in FIG. 1, the terminal devices 105 and 106, and the terminal devices 105 and 107 may directly communicate with each other by using the SL technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in FIG. 1 may directly communicate with the network device 101. Alternatively, indirect communication with the network device 101 may be implemented. For example, the terminal device 107 in FIG. 1 communicates with the network device 101 via the terminal device 105.

It should be understood that FIG. 1 shows an example of one network device, a plurality of terminal devices, and a communication link between the communication devices. Optionally, the communication system 100 may include a plurality of network devices, and another quantity of terminal devices, for example, more or fewer terminal devices may be included in coverage of each network device. This is not limited in this application.

Optionally, a plurality of antennas may be configured for the network device 101 and the terminal devices 102 to 107 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving.

Optionally, the wireless communication system 100 may further include another network entity such as a network controller and a mobility management entity. Embodiments of this application are not limited thereto.

In the non-terrestrial network (non-terrestrial network, NTN), a satellite can realize transparent payload (transparent payload) transmission or regenerative payload (regenerative payload) transmission.

FIG. 2 is a diagram of an application scenario according to an embodiment of this application. The scenario may be referred to as a "transparent satellite architecture (RAN architecture with transparent satellite)" or referred to as a bent pipe (bent pipe) mode. UE communicates with a ground base station through a universal terrestrial radio access network-user (universal terrestrial radio access network-user, Uu) interface. The satellite can implement transparent payload transmission between a user and the ground base station. The satellite and an NTN gateway may be considered as remote radio units (remote radio units) of the ground base station, and implement transparent forwarding of a signal. In other words, the satellite supports only functions such as radio frequency filtering, frequency conversion, and amplification, with a signal waveform remaining unchanged. Forwarding by the satellite is transparent to a terminal device. The ground base station may communicate with a core network (core network, CN) through a next generation network (next generation, NG) interface, and exchange, through the NG interface, non-access stratum (non-access stratum, NAS) signaling of the core network and service data of the UE.

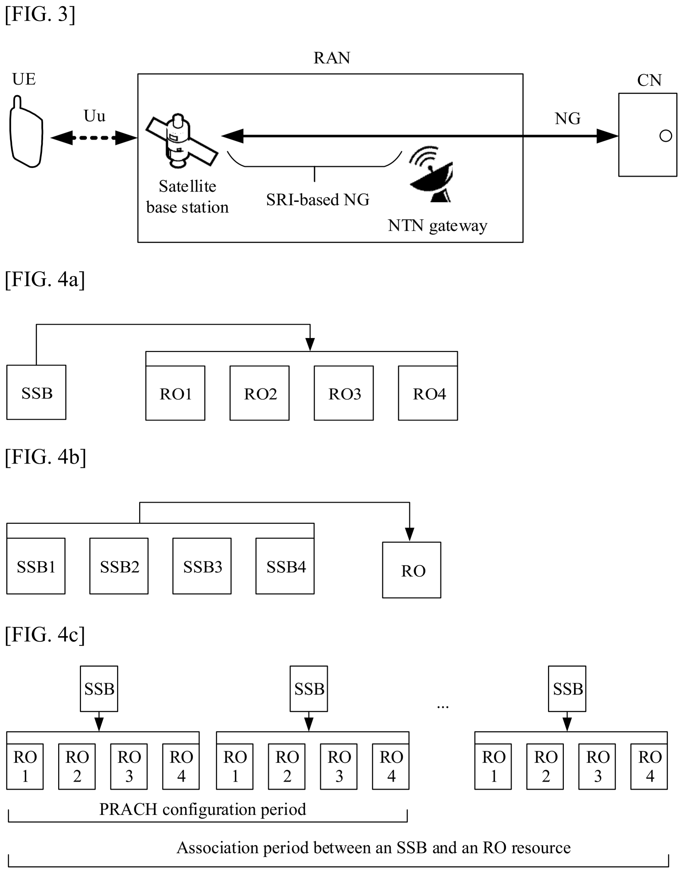

FIG. 3 is a diagram of another application scenario according to an embodiment of this application. The scenario may be referred to as a regenerative (regenerative) mode. As shown in FIG. 3, the satellite has some or all functions of an access network device, and may be referred to as a satellite base station. The satellite may provide a wireless access service, and schedule a radio resource for a terminal device that accesses a network by using the satellite base station. The satellite base station communicates with the UE through the Uu interface. The satellite base station may communicate with the CN through the NG interface, and the satellite base station and the core network may exchange, through the NG interface, NAS signaling and service data of the UE. A satellite radio interface (satellite radio interface, SRI) is a feeder link between the NTN gateway and the satellite. In FIG. 3, the SRI interface may be used as a part of the NG interface to implement communication and interaction between the satellite and the core network.

It may be understood that embodiments of this application are not limited to a satellite scenario, and the satellite scenario is only one of application scenarios of embodiments of this application. For example, embodiments of this application may be further applicable to a terrestrial communication system. For another example, embodiments of this application are further applicable to a scenario in which a plurality of SSB quantities and/or a plurality of SSB patterns coexist in a future 6G evolution process. For another example, embodiments of this application may be further applied to a scenario in which the satellite is used for integrated access and backhaul (integrated access and backhaul, IAB).

To support wider service coverage, a network device may need to provide a network service for a larger communication area. An NTN communication system is used as an example. Each satellite/high-altitude platform/base station can generally cover a large area. With a given link budget and system resources, a satellite network device improves a coverage area of a single beam by virtue of beam design, to improve coverage of the entire satellite. Due to limited coverage of a single beam, the single satellite, high-altitude platform, or base station still uses a large quantity of beams to complete full coverage. The protocol defines different maximum quantities of candidate SSBs for different frequency bands. A quantity of sweeping beams used for coverage of a single satellite may be greater than the maximum quantity of SSBs defined in the protocol. New satellite-specific frequency bands (band) n255 and n256 in the 3GPP standard are used as an example. A quantity of sweeping beams required for coverage of a single satellite may be greater than 4, for example, 8, 16, 32, 64, 128, 256, or 512.

In an initial access phase, the satellite serves as a network device, sequentially sweeps SSB beams, and configures a random access resource for a terminal device by broadcasting system information. The terminal device may perform a synchronization signal and PBCH block (Synchronization Signal and PBCH block, SSB) search after being powered on, and perform a frequency sweep on a candidate synchronization raster (Sync Raster). Based on a frequency band and subcarrier spacing (subcarrier spacing, SCS), the terminal device may determine a candidate synchronization raster and a used SSB pattern (pattern). The SSB pattern defines different maximum quantities of candidate SSBs and specific symbol positions occupied by SSBs indicated by different SSB indexes. Different maximum quantities of candidate SSBs correspond to different SSB sweeping periods, and correspond to different access delays.

As the link budget increases, or as a quantity of satellites simultaneously working increases, a quantity of beams used for coverage of a single satellite may decrease accordingly. For example, a quantity of SSB beams is reduced from 512 to 256, 128, 64, 32, or 16. The network device reuses a system frame number to indicate, to the terminal device, an extended quantity of indexes of candidate SSBs, which is greater than a maximum quantity of candidate SSBs (for example, a maximum quantity 4 of candidate SSBs in n255 band or n256 band) predefined in the protocol. In an SSB pattern, a default SSB sweeping period varies with a maximum quantity of candidate SSBs. For example, when the maximum quantity of candidate SSBs is 8, the default SSB sweeping period may be 20 ms; when the maximum quantity of candidate SSBs is 16, the default SSB sweeping period may be 40 ms; when the maximum quantity of candidate SSBs is 32, the default SSB sweeping period may be 80 ms; when the maximum quantity of candidate SSBs is 64, the default SSB sweeping period may be 160 ms; when the maximum quantity of candidate SSBs is 128, the default SSB sweeping period may be 320 ms; and when the maximum quantity of candidate SSBs is 256, the default SSB sweeping period is 640 ms.

It may be understood that different maximum quantities of candidate SSBs correspond to different SSB patterns. For example, in an SSB pattern, when the maximum quantity of candidate SSBs is 8, the default SSB sweeping period may be 20 ms. In an SSB pattern, when the maximum quantity of candidate SSBs is 16, the default SSB sweeping period may be 40 ms. In an SSB pattern, when the maximum quantity of candidate SSBs is 32, the default SSB sweeping period may be 80 ms. In an SSB pattern, when the maximum quantity of candidate SSBs is 64, the default SSB sweeping period may be 160 ms. In an SSB pattern, when the maximum quantity of candidate SSBs is 128, the default SSB sweeping period may be 320 ms. In an SSB pattern, when the maximum quantity of candidate SSBs is 256, the default SSB sweeping period is 640 ms.

When different link budgets or different requirements are considered, the network device may send the SSB a plurality of times in a time division multiplexing manner. For example, the network device may perform N rounds of SSB transmissions. N is a quantity of rounds for sending SSBs in a time division multiplexing manner. When different link budgets or different requirements are considered, it is determined that a quantity of indexes (index) of candidate SSBs is M1, and a maximum of M1 SSB beams in different beam directions may be used. M1 candidate sending positions are used to transmit M1 SSBs in one period T1. In other words, the M1 candidate sending positions are M1 candidate resources used to transmit M1 SSBs in one period T1. The M1 candidate sending positions are in a one-to-one correspondence with the M1 SSBs, that is, each of the M1 candidate sending positions is used to transmit, in one period T1, an SSB corresponding to each candidate sending position. Any two of the M1 SSBs are different. M1 is an integer greater than 1, and T1 is a positive integer. A total of M2 beams are required in actual coverage. In this case, $\lceil M2/M1 \rceil = N$, that is, a ceiling operation is performed on M2/M1, and an obtained calculation result is N.

For example, if the quantity M1 of indexes of candidate SSBs is 8, a maximum of eight SSB beams in different beam directions may be used. If M2 SSB beams are used for actual coverage, and M2=64, N=8 rounds of time division multiplexing sweeping may be performed on eight SSB beams, to implement coverage of 64 SSB beams. It is assumed that a default sweeping period used for eight SSB beams is 20 ms, and a default sweeping period used for 64 SSB beams is 160 ms. Specifically, eight SSBs are sent to a coverage area 1 in the first round of 20 ms transmission, eight SSBs are sent to a coverage area 2 in the second round of 20 ms transmission, and so on, and eight SSBs are sent to a coverage area 8 in the eighth round of 20 ms transmission. After eight rounds of sweeping are completed, the next 160 ms SSB periodicity starts. SSB#0 in different rounds of 20 ms transmissions covers different geographical areas. Specifically, SSB#0 in the first round of 20 ms transmission, SSB#0 in the second round of 20 ms transmission, SSB#0 in the third round of 20 ms transmission, SSB#0 in the fourth round of 20 ms transmission, SSB#0 in the fifth round of 20 ms transmission, SSB#0 in the sixth round of 20 ms transmission, SSB#0 in the seventh round of 20 ms transmission, and SSB#0 in the eighth round of 20 ms transmission cover different geographical areas. SSB#0 in the ninth round of 20 ms transmission and SSB#0 in the first round of 20 ms transmission cover a same geographical area.

For example, if the quantity M1 of indexes of candidate SSBs is 128, a maximum of 128 SSB beams in different beam directions may be used. If M2=256 SSB beams are used for actual coverage, two rounds of time division multiplexing sweeping may be performed on 128 SSB beams, to implement coverage of 256 SSB beams. It is assumed that a default sweeping period used for 128 SSB beams is 160 ms, and a default sweeping period used for 256 SSB beams is 320 ms. Specifically, 128 SSBs are sent to the coverage area 1 in the first round of 320 ms transmission, and 128 SSBs are sent to the coverage area 2 in the second round of 320 ms transmission. After two rounds of sweeping are completed, the next 640 ms SSB periodicity starts. SSB#0 in the first round of 320 ms transmission and SSB#0 in the second round of 320 ms transmission cover different geographical areas. SSB#0 in the third round of 320 ms transmission and SSB#0 in the first round of 320 ms transmission cover a same geographical area.

Because a same SSB index correspond to different beam directions, SSB identifiers are ambiguous. For example, beams with a same SSB index appear twice within 640 ms, beam directions of the same SSB index are different, and covered geographical areas are different. In this case, SSB#0 corresponds to a plurality of different beam directions. Therefore, the identifier of the SSB is ambiguous.

The network device controls the beam sweeping process and completes sending of SSBs associated with different beams. Because the quantity of SSBs defined in the protocol is relatively small, the network device may increase a coverage area through a plurality of rounds of sending of SSB beams. In other words, SSB beams with a same SSB index have different directions or coverage areas. As beams with a same SSB index are associated with a plurality of ROs, the terminal device determines a plurality of ROs based on a received SSB. In this case, the terminal device cannot determine an RO associated with a current SSB beam.

In addition, the terminal device determines an associated access occasion (random access channel occasion, RO) resource based on an SSB index. Due to an ambiguous SSB identifier, the terminal device sends a physical random access channel (physical random access channel, PRACH) on an RO that is not for the terminal device. Based on a mapping relationship between an SSB and an RO resource, SSBs with a same index are associated with a same RO resource. For example, RO resources (with an identifier of RO#0 or the like) associated with SSB#0s with a same index cannot be distinguished, and two RO#0s correspond to different beam directions and different coverage areas. UEs in different geographical areas cannot distinguish between ROs and determine an appropriate RO. As a result, the UE sends the PRACH on an RO that is not for the UE, causing unnecessary overheads and waste of the terminal device.

In view of this, embodiments of this application provide an access occasion determining method, to reduce overheads for accessing an RO by a terminal device.

For ease of understanding, the following first describes a frame structure in embodiments of this application.

A frame structure is a structure presented by dividing a time resource (or referred to as a time domain resource) for signal transmission. In wireless communication, common time units in a frame structure are radio frame (or referred to as system frame (system frame)), half-frame (half-frame), subframe (subframe), slot (slot), and symbol (symbol) in descending order. In LTE and 5G systems, duration of one radio frame is 10 ms, one radio frame includes two half-frames, duration of each half-frame is 5 ms, one radio frame includes 10 subframes, and duration of one subframe is 1 ms. A quantity of slots included in one subframe is related to an SCS of a radio frame. An NR system is used as an example. There are five different values of subcarrier spacing: 15 kHz, 30 kHz, 60 kHz, and 120 kHz. For example, if SCS=15 kHz, one subframe includes one slot, and duration of the slot is 1 ms; if SCS=30 kHz, one subframe includes two slots, and duration of one slot is 0.5 ms; if SCS=60 kHz, one subframe includes four slots, and duration of one slot is 0.25 ms; if SCS=120 kHz, one subframe includes eight slots, and duration of one slot is 0.125 ms; or if SCS=240 kHz, one slot includes 16 slots, and duration of one slot is 0.0625 ms.

In the case of a normal cyclic prefix (cyclic prefix, CP), one slot includes 14 symbols. In the case of an extended CP, one slot includes 12 symbols.

It should be understood that, in a future communication system, a definition of the frame structure may be different from the definition in the foregoing description. This is not limited in this application.

The following describes a mapping rule between an SSB and an RO in embodiments of this application. The mapping rule between an SSB and an RO may also be referred to as a mapping rule between an SSB and an RO resource.

Each valid RO and a preamble sequence included in the RO are associated with and mapped to the SSB. After a user selects an SSB, the user randomly selects a preamble sequence on a corresponding RO resource based on the mapping rule from the SSB to the RO for sending. Beams are introduced to the NR system. Therefore, a random access procedure supports a beam sweeping mechanism. In the NR system, downlink beam information obtained through scanning by the terminal device may be further fed back to a network device. UE corresponding to SSBs identified by different indexes performs sending in corresponding ROs. A correspondence between an SSB and an RO is configured by using a UE-dedicated radio resource control (radio resource control, RRC) message or a common RRC message. For example, the common RRC message may include a system information block 1 (System Information Block 1, SIB1). Specifically, the correspondence between the SSB and the RO may be configured by using a "ssb-perRACH-OccasionAndCB-PreamblesPerSSB" field in the SIB1.

In the NR system, SSBs are broadcast in downlink, to support a beam management mechanism during initial access. There are a plurality of sending occasions for the SSB in a time domain period, and different beams may be used. Therefore, in the NR system, only when a beam sweeping signal of the SSB covers the terminal device, the terminal device can initiate random access after performing downlink synchronization and obtaining PRACH-related information. To be specific, an association relationship is established between a PRACH sending moment and the SSB. The network device determines, based on a resource position of an uplink PRACH of the terminal device, a beam for sending a downlink random access response (random access response, RAR). The relationship between the SSB and the PRACH sending moment is determined by using RACH configuration information. For example, the PRACH configuration information may include at least one of the following: a PRACH period configured in a RACH, a subframe number of the RO, or the like.

ssb-perRACH-OccasionAndCB-PreamblesPerSSB in the PRACH configuration information is used to configure a quantity of SSBs corresponding to each RACH moment and a quantity of contention-based preambles used by each SSB. For example, a value range of the quantity of SSBs is {1/8, 1/4, 1/2, 1, 2, 4, 6, 16}.

When ssb-perRACH-Occasion<1, that is, one SSB corresponds to a plurality of ROs, a correspondence between an SSB index and a contention-based preamble in the RACH follows the order below:

(1) Preambles in the ROs are arranged in ascending order of preamble indexes.
(2) When a plurality of ROs are configured in frequency domain, preambles are arranged in ascending order of RO frequency domain indexes.
(3) When a plurality of ROs are configured in a PRACH slot, preambles are arranged in ascending order of indexes in the PRACH slot.
(4) When a plurality of PRACH slots are configured, preambles are arranged in ascending order of indexes of the PRACH slots.

For example, when ssb-perRACH-Occasion=1/4, as shown in FIG. 4a, one SSB is mapped to four ROs: RO1, RO2, RO3, and RO4.

When ssb-perRACH-Occasion≥1, that is, a plurality of SSBs correspond to one RO, consecutive (CB-PreamblesPerSSB) CB preambles starting from n*64/N correspond to SSB n. N=ssb-perRACH-Occasion, n=CB-PreamblesPerSSB, and n belongs to [0, N-1].

For example, when ssb-perRACH-Occasion=4, as shown in FIG. 4b, four SSBs are mapped to one RO, and the four SSBs are SSB1, SSB2, SSB3, and SSB4.

There are a plurality of sending occasions for an SSB in an SSB periodicity, and a PRACH has a plurality of sending moments in time domain and frequency domain. A mapping relationship is established between each SSB and a PRACH sending moment.

The following describes an association period (association period) between the SSB and the RO resource in embodiments of this application. The association period between the SSB and the RO resource may also be referred to as a mapping cycle between the SSB and the RO resource, or referred to as an association period for short, or referred to as a mapping cycle for short.

The association period is a period used after all SSBs in one SSB periodicity are completely mapped to an RO resource. In other words, the association period indicates a quantity of PRACH configuration periods in time domain after all SSBs are completely mapped to an RO. As shown in FIG. 4c, eight ROs being configured in one PRACH configuration period is used as an example. Mapping starts from a frame number 0; a minimum value of the PRACH configuration period in a configuration table is obtained, where the minimum value is selected from {1, 2, 4, 8, 16} radio frames; and it is required that all configured SSBs can be completely mapped to the RO in the association period at least once. In one mapping cycle, if some ROs are not mapped to after the entire cyclic SSB-to-RO mapping ends, no mapping relationship is established between the SSB and the ROs that are not mapped to.

Without loss of generality, the following describes in detail the SSB transmission method provided in embodiments of this application by using interaction between the network device and the terminal device as an example.

It should be understood that, merely for ease of understanding and description in embodiments of this application, the interaction between the network device and the terminal device is used as an example to describe in detail the method provided in embodiments of this application. However, this should not constitute any limitation on an execution body of the method provided in this application. For example, a terminal device described in the following embodiments may be replaced with a component (such as a circuit, a chip, a chip system, or another functional module that can invoke and execute a program) disposed in the terminal device, and a network device described in the following embodiments may be replaced with a component (such as a circuit, a chip, a chip system, or another functional module that can invoke and execute a program) disposed in the network device, provided that a program that records code of the method provided in embodiments of this application can be run to implement the method provided in embodiments of this application to implement SSB transmission.

In embodiments of this application, for ease of description, when numbering is related, numbers may be consecutive and start from 0. For example, numbers of N rounds of SSB transmissions are 0 to N-1, and numbers of M SSBs in each round of SSB transmission are 0 to M-1. Certainly, specific implementation is not limited thereto. For example, consecutive numbering may start from 1. For example, the N rounds of SSB transmissions are numbered 1 to N, an $i^{th}$ round of SSB transmission in the N rounds of SSB transmissions is i in 1 to N, a $j^{th}$ round of SSB transmission in the N rounds of SSB transmissions is j in 1 to N, and i is not equal to j. For brevity, no enumeration is provided herein.

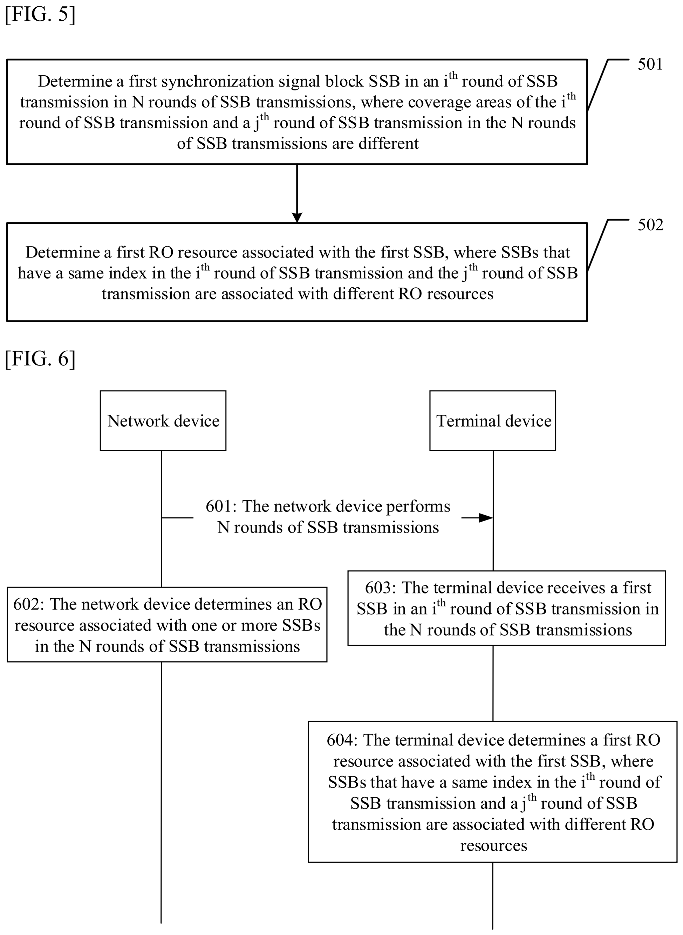

FIG. 5 is a flowchart of an RO determining method according to an embodiment of this application. The method may be performed by a terminal device or a network device. The method may include the following steps.

501: Determine a first SSB in an $i^{th}$ round of SSB transmission in N rounds of SSB transmissions, where coverage areas of the $i^{th}$ round of SSB transmission and a $j^{th}$ round of SSB transmission in the N rounds of SSB transmissions are different, N, i, and j are integers, and i is not equal to j.

The N rounds of SSB transmissions may be N rounds of SSB sending by the network device, or N rounds of SSB scanning by the terminal device. For example, the network device sends the N rounds of SSB transmissions through time division multiplexing, and the terminal device may perform N rounds of SSB sweeping, to receive the N rounds of SSBs sent by the network device. For example, N is a quantity of rounds for sending SSBs in a time division multiplexing manner. When different link budgets or different requirements are considered, if it is determined that a quantity of indexes of candidate SSBs is M1, a maximum of M1 SSB beams in different beam directions may be used; and if a total of M2 beams are required in actual coverage,

$$[M2/M1]=N.$$

The N rounds of SSB transmissions include the $i^{th}$ round of SSB transmission and the $j^{th}$ round of SSB transmission, where i is not equal to j, and i and j may be any two different values less than or equal to N. Values of i and j are not limited. The coverage areas of the $i^{th}$ round of SSB transmission and the $j^{th}$ round of SSB transmission are different, and different coverage areas mean that SSB beams cover different geographical areas. For example, beams of all rounds of SSBs in the N rounds of SSB transmissions cover different geographical areas. For example, the coverage areas of the $i^{th}$ round of SSB transmission and the $j^{th}$ round of SSB transmission being different may be specifically that the coverage areas of the $i^{th}$ round of SSB transmission and the $j^{th}$ round of SSB transmission do not overlap at all. Alternatively, the coverage areas of the $i^{th}$ round of SSB transmission and the

$j^{th}$ round of SSB transmission being different may be specifically that the coverage areas of the $i^{th}$ round of SSB transmission and the $j^{th}$ round of SSB transmission partially overlap but cannot completely overlap.

The $i^{th}$ round of SSB transmission may include one or more SSBs. For example, the $i^{th}$ round of SSB transmission includes a first SSB, and the first SSB is an SSB in the $i^{th}$ round of SSB transmission. For another example, the $j^{th}$ round of SSB transmission includes a second SSB, and the second SSB is an SSB in the $j^{th}$ round of SSB transmission.

502: Determine a first RO resource associated with the first SSB, where SSBs that have a same index in the $i^{th}$ round of SSB transmission and the $j^{th}$ round of SSB transmission are associated with different RO resources.

The first SSB has an index in the $i^{th}$ round of SSB transmission, and the SSBs that have the same index in the $i^{th}$ round of SSB transmission and the $j^{th}$ round of SSB transmission are associated with different RO resources. In other words, an RO resource allocated to the first SSB in the $i^{th}$ round of SSB transmission is different from an RO resource allocated to an SSB, in the $j^{th}$ round of SSB transmission, that has a same index as the first SSB. Therefore, RO resources associated with SSBs that belong to different rounds of SSB transmissions are different. In this way, the terminal device is prevented from sending a random access request on an RO resource that is not for the terminal device, so that unnecessary power consumption and overheads of the terminal device can be avoided.

In this embodiment of this application, it is ensured that the SSBs that have the same index in the $i^{th}$ round of SSB transmission and the $j^{th}$ round of SSB transmission are associated with different RO resources. In other words, RO resources associated with SSBs that have a same index in different rounds are different. The first RO resource is configured for the first SSB. For example, the first RO resource may include one or more RO resources. The terminal device may send the random access request on the first RO resource, and the terminal device does not send the random access request on an RO resource other than the first RO resource. This can avoid unnecessary power consumption and overheads of the terminal device.

In some embodiments of this application, the first RO resource is different from a second RO resource. The second RO resource is associated with the second SSB in the $j^{th}$ round of SSB transmission. The first SSB and the second SSB have a same index.

Specifically, the first SSB and the second SSB belong to different rounds of SSB transmissions, but the first SSB and the second SSB have a same SSB index. After the second SSB in the $j^{th}$ round of SSB transmission is determined, the second RO resource associated with the second SSB may be determined. To avoid a conflict in RO resource allocation, the first RO resource is configured to be different from the second RO resource. For example, the first RO resource and the second RO resource may be different RO resources obtained in a same RO resource configuration manner, or the first RO resource and the second RO resource are different RO resources obtained in different RO resource configuration manners.

For example, if an index of the first SSB is k, it indicates that the first SSB is a $(k+1)^{th}$ SSB in the $i^{th}$ round of SSB transmission, and if an index of the second SSB is k, it indicates that the second SSB is a $(k+1)^{th}$ SSB in the $j^{th}$ round of SSB transmission. The first SSB is associated with the first RO resource, the second SSB is associated with the second RO resource, and the first RO resource is different from the second RO resource. When the terminal device determines the first SSB, the terminal device may send the random access request on the first RO resource associated with the first SSB. The first SSB and the second SSB have the same index, but the terminal device does not send the random access request on the second RO resource. This prevents the terminal device from sending the random access request on an RO resource that is not for the terminal device, and unnecessary power consumption and overheads of the terminal device can be avoided.

In some embodiments of this application, a time interval between the first RO resource and the first SSB is less than or equal to a first threshold.

The first threshold is determined based on a configuration of a network device, or is predefined in a protocol.

An association rule between the SSB and the RO resource is described in the foregoing content of embodiments of this application. After the first SSB is determined, the first RO associated with the first SSB is determined based on a time interval between the RO resource and the SSB being less than or equal to the first threshold. Therefore, the time interval between the first RO resource and the first SSB is less than or equal to the first threshold. A specific implementation of the first threshold is not limited. For example, the network device may configure a specific value of the first threshold, or predefine a specific value of the first threshold in a preset communication protocol.

In this embodiment of this application, it is ensured that a time interval between an RO resource used by the UE to send the PRACH and an optimal SSB is not excessively large (or excessively long). If the time interval is excessively large, an SSB associated with the selected RO resource is no longer a current optimal SSB, thereby affecting access performance of the UE. To ensure access performance of the UE and ensure validity of the RO resource for sending the PRACH, a time interval between the first RO resource for sending the PRACH and the first SSB is less than or equal to the first threshold, so that access performance of the UE can be improved.

For example, the first SSB is an optimal SSB at a T1 moment, the first SSB may be represented as SSB#0, the first RO resource is represented as RO#0, and SSB#0 is associated with RO#0. The second SSB is an optimal SSB at a T2 moment, the second SSB may be represented as SSB#1, the second RO resource is represented as RO#1, and SSB#1 is associated with RO#1. If the time interval between the selected RO resource and the optimal SSB is not limited, the following case may exist: The UE determines optimal SSB#0 and RO#0 at the T1 moment, but sends the PRACH in RO#0 after a plurality of periods, where the optimal SSB at this time is no longer SSB#0. When the optimal SSB is changed to the second SSB, the RO resource for sending the PRACH should be updated to the second RO resource associated with the second SSB. In other words, the RO resource for sending the PRACH should be updated to RO#1 associated with SSB#1.

Further, in some embodiments of this application, the first threshold includes at least one of the following: an SSB periodicity of the $i^{th}$ round of SSB transmission, or an association period between an SSB in the $i^{th}$ round of SSB transmission and an RO resource.

In this embodiment of this application, the time interval between the first RO resource and the first SSB is less than or equal to the SSB periodicity, or the time interval between the first RO resource and the first SSB is less than or equal to the association period. This can ensure that the time interval between the selected RO resource and the optimal SSB is less than or equal to the SSB periodicity, or ensure that the time interval between the selected RO resource and the optimal SSB is less than or equal to the association period, thereby improving access performance of the UE. For descriptions of the SSB periodicity and the association period, refer to the foregoing content. Details are not described herein again.

In some embodiments of this application, the first RO resource is a plurality of RO resources associated with the first SSB, and a time interval between each of the plurality of RO resources and the first SSB is less than or equal to a second threshold.

The second threshold is determined based on a configuration of the network device, or is predefined in a protocol.

The first RO resource includes a plurality of RO resources, and the plurality of RO resources are all associated with the first SSB. For example, as shown in FIG. 4a, the first RO resource may include four RO resources, and the four RO resources are all associated with the first SSB.

An association rule between the SSB and the RO resource is described in the foregoing content of embodiments of this application. After the first SSB is determined, the plurality of RO resources associated with the first SSB are determined based on the time interval between the RO resource and the SSB being less than or equal to the second threshold. Therefore, the time interval between each of the plurality of RO resources and the first SSB is less than or equal to the second threshold. A specific implementation of the second threshold is not limited. For example, the network device may configure a specific value of the second threshold, or predefine a specific value of the second threshold in a preset communication protocol.

In this embodiment of this application, it is ensured that the time interval between the RO resource used by the UE to send the PRACH and the optimal SSB is not excessively large (or excessively long). If the time interval is excessively large, an SSB associated with the selected RO resource is no longer a current optimal SSB, thereby affecting access performance of the UE. To ensure access performance of the UE, when the first SSB is associated with a plurality of RO resources, it is ensured that each RO resource for sending the PRACH is valid. Therefore, the time interval between each of the plurality of RO resources used to send the PRACH and the first SSB is less than or equal to the second threshold, so that the access performance of the UE can be improved.

Further, in some embodiments of this application, the second threshold includes at least one of the following: an integer multiple of the SSB periodicity of the i<sup>th</sup> round of SSB transmission, or an integer multiple of the association period between the SSB in the i<sup>th</sup> round of SSB transmission and the RO resource.

In this embodiment of this application, the time interval between each of the plurality of RO resources and the first SSB is less than or equal to integer multiple of the SSB periodicity, or the time interval between each of the plurality of RO resources and the first SSB is less than or equal to integer multiple of the association period. The integer multiple may be specifically one or more times. This is not limited herein. In this embodiment of this application, it can be ensured that the time interval between each of the plurality of selected RO resources and the optimal SSB is less than or equal to the integer multiple of the SSB periodicity, or it can be ensured that the time interval between each of the plurality of selected RO resources and the optimal SSB is less than or equal to the integer multiple of the association period, thereby improving access performance of the UE. For descriptions of the SSB periodicity and the association period, refer to the foregoing content. Details are not described herein again.

In some embodiments of this application, the second threshold is equal to the first threshold, or a difference between the second threshold and the first threshold is an integer multiple of the SSB periodicity or the association period.

Specifically, in the foregoing embodiment, the second threshold may be equal to the first threshold, or the second threshold is a multiple of the first threshold. Specifically, the first threshold and the second threshold are configured depending on an application scenario.

FIG. 6 is a flowchart of an RO determining method according to an embodiment of this application. Using an interaction procedure between a network device and a terminal device as an example, the method may include the following steps.

601: The network device performs N rounds of SSB transmissions, where coverage areas of an i<sup>th</sup> round of SSB transmission and a j<sup>th</sup> round of SSB transmission in the N rounds of SSB transmissions are different, N, i, and j are integers, and i is not equal to j.

The network device performs the N rounds of SSB transmissions separately. For example, the network device performs the i<sup>th</sup> round of SSB transmission and the j<sup>th</sup> round of SSB transmission in a time division multiplexing manner, and the network device separately performs the i<sup>th</sup> round of SSB transmission and the j<sup>th</sup> round of SSB transmission in different coverage areas.

602: The network device determines an RO resource associated with one or more SSBs in the N rounds of SSB transmissions, where SSBs that have a same index in the i<sup>th</sup> round of SSB transmission and the j<sup>th</sup> round of SSB transmission are associated with different RO resources.

For each of the N rounds of SSB transmissions, the network device may determine an RO resource associated with one or more SSBs in each round of SSB transmission. For example, one SSB may be associated with one or more RO resources, or a plurality of SSBs may be associated with one RO resource. The network device performs the i<sup>th</sup> round of SSB transmission and the j<sup>th</sup> round of SSB transmission in the time division multiplexing manner. The SSBs that have the same index in the i<sup>th</sup> round of SSB transmission and the j<sup>th</sup> round of SSB transmission are associated with different RO resources. In other words, an RO resource allocated to the first SSB in the i<sup>th</sup> round of SSB transmission is different from an RO resource allocated to an SSB, in the j<sup>th</sup> round of SSB transmission, that has a same index as the first SSB. Therefore, RO resources associated with SSBs that belong to different rounds of SSB transmissions are different. In this way, the terminal device is prevented from sending a random access request on an RO resource that is not for the terminal device, so that unnecessary power consumption and overheads of the terminal device can be avoided.

An O-RAN node is used as an example. In a scenario in which both a DU and a CU are deployed on the ground, steps 601 and 602 may be specifically performed by the CU or the DU in the O-RAN node. In a scenario in which the DU is deployed on a satellite and the CU is deployed on the ground, steps 601 and 602 may be specifically performed by the DU in the O-RAN node.

603: The terminal device receives the first SSB in the i<sup>th</sup> round of SSB transmission in N rounds of SSB transmissions, where coverage areas of the i<sup>th</sup> round of SSB transmission and the j<sup>th</sup> round of SSB transmission in the N rounds of SSB transmissions are different, N, i, and j are integers, and i is not equal to j.

The terminal device performs N rounds of SSB scanning separately. For example, the terminal device performs an i<sup>th</sup> round of SSB scanning and a j<sup>th</sup> round of SSB scanning, and the terminal device separately performs the i<sup>th</sup> round of SSB scanning and the j<sup>th</sup> round of SSB scanning in different coverage areas.

The $i^{th}$ round of SSB transmission may include one or more SSBs. For example, the $i^{th}$ round of SSB transmission includes the first SSB, and the first SSB is an SSB in the $i^{th}$ round of SSB transmission.

604: The terminal device determines a first RO resource associated with the first SSB, where SSBs that have a same index in the $i^{th}$ round of SSB transmission and the $j^{th}$ round of SSB transmission are associated with different RO resources.

The first SSB has an index in the $i^{th}$ round of SSB transmission, and the SSBs that have the same index in the $i^{th}$ round of SSB transmission and the $j^{th}$ round of SSB transmission are associated with different RO resources. In other words, an RO resource allocated to the first SSB in the $i^{th}$ round of SSB transmission is different from an RO resource allocated to an SSB, in the $j^{th}$ round of SSB transmission, that has a same index as the first SSB. Therefore, RO resources associated with SSBs that belong to different rounds of SSB transmissions are different. In this way, the terminal device is prevented from sending a random access request on an RO resource that is not for the terminal device, so that unnecessary power consumption and overheads of the terminal device can be avoided.

In some embodiments of this application, the first SSB and the first RO resource meet the following relationship:

$$(T_{RO}-T_{SSB\#k}) \bmod (N*T_{period}) \leq T_{threshold}.$$

$T_{SSB\#k}$ represents a time unit in which the first SSB is located, k is an index of the first SSB, and k is an integer.

$T_{RO}$ represents a time unit in which the first RO resource is located.

$T_{RO}-T_{SSB\#k}$ represents a time interval between the first RO resource and the first SSB.

$T_{period}$ represents the SSB periodicity of the $i^{th}$ round of SSB transmission, or the association period between the SSB in the $i^{th}$ round of SSB transmission and the RO resource, and $N*T_{period}$ represents a sum of SSB periodicities of the N rounds of SSB transmissions, or a sum of association periods between SSBs and RO resources in the N rounds of SSB transmissions.

$T_{threshold}$ represents a third threshold, and the third threshold is determined based on a configuration of the network device, or is predefined in a protocol.

- represents a subtraction operation, * represents a multiplication operation, mod represents a modulo operation, and $\leq$ represents being less than or equal to.

Specifically, in this embodiment of this application, a mapping relationship between the RO resource and the SSB is constrained, to be specific, $T_{RO}-T_{SSB\#k}$ is constrained to meet $(T_{RO}-T_{SSB\#k}) \bmod (N*T_{period}) \leq T_{thres-}$ hold, so that a plurality of SSBs that have a same index (index) in different beam directions corresponding to a same RO resource are distinguished. The terminal device may determine, based on the first SSB, a quantity N of SSB transmission rounds, and the SSB periodicity that are determined by the terminal device, a position of an RO resource for the terminal device.

It may be understood that $T_{RO}$ that meets the following relationship $(T_{RO}-T_{SSB\#k}) \bmod (N*T_{period}) \leq T_{threshold}$ represents a time unit in which the first RO resource is located, and the first RO resource that meets the relationship may be one or more RO resources.

For example, N represents a quantity of rounds of SSB transmissions. N can be calculated by dividing a total quantity of SSBs required for full coverage by a maximum quantity of candidate SSBs. For example, 256 SSBs are used for full coverage, but there are a maximum of 128 SSB indexes. In this case, two rounds of transmission of 128 SSBs are performed through time division multiplexing to complete full coverage of 256 SSBs.

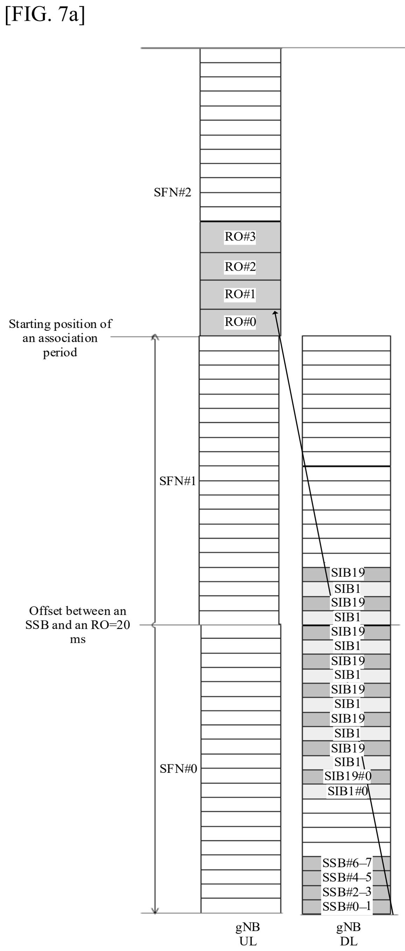

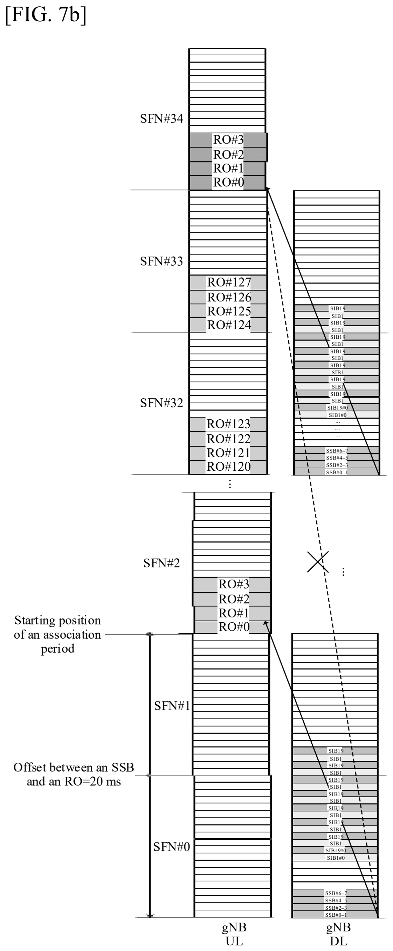

As shown in FIG. 7a and FIG. 7b, an offset between the SSB and the RO is equal to 20 ms. For downlink (downlink, DL) of a gNB, when an SSB periodicity is 320 ms and N=2, for example, a third threshold is 320, $(T_{RO}-T_{SSB\#k}) \bmod 640 \text{ ms} \leq 320$. $T_{SSB\#k}$ represents a time unit in which the first SSB is located. For a first group of SSBs, the first SSB belongs to the first group of SSBs, and a first RO resource whose $T_{RO}$ meets $T_{RO}-T_{SSB\#k}$ mod 640 ms $\leq$ 320 is an RO corresponding to the first group of SSBs. For example, in FIG. 7a, an RO resource starting from SFN#2 is the first RO resource. For a second group of SSBs (SSBs starting from 320 ms), a second RO resource whose $T_{RO}$ meets $T_{RO}-T_{SSB\#k}$ mod 640 ms $\leq$ 320 is an RO corresponding to the second group of SSBs, for example, an RO resource starting from SFN#34 in FIG. 7b. According to this embodiment of this application, the first SSB and the first RO resource meet the following relationship: $(T_{RO}-T_{SSB\#k}) \bmod (N*T_{period}) \leq T_{threshold}$. The first SSB can be associated with only an RO resource in SFN#2, and the first SSB cannot be associated with an RO resource in SFN#34, so that the terminal device can determine the RO resource for the terminal device, to reduce overheads of the terminal device.

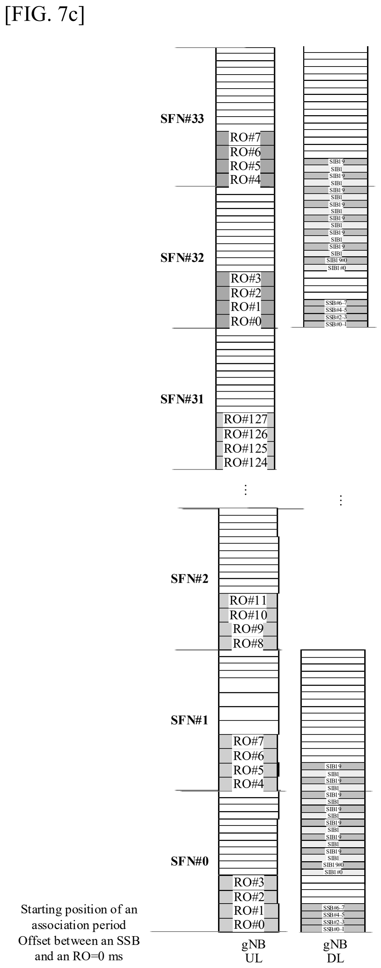

As shown in FIG. 7c, an offset between the SSB and the RO is equal to 0, that is, the RO is mapped to the SSB starting from SFN#0. For DL of a gNB, when an SSB periodicity is 320 ms and N=2, for example, the third threshold is 320, $(T_{RO}-T_{SSB\#k}) \bmod 640 \text{ ms} \leq 320$. $T_{SSB\#k}$ represents a time unit in which the first SSB is located. For a first group of SSBs, the first SSB belongs to the first group of SSBs, and a first RO resource whose $T_{RO}$ meets $T_{RO}-T_{SSB\#k}$ mod 640 ms $\leq$ 320 is an RO corresponding to the first group of SSBs. For example, in FIG. 7c, an RO resource starting from SFN#0 is the first RO resource.

For a second group of SSBs (SSBs starting from 320 ms), a second RO resource whose $T_{RO}$ meets $T_{RO}-T_{SSB\#k}$ mod 640 ms≤320 is an RO corresponding to the second group of SSBs, for example, an RO resource starting from SFN#32 in FIG. 7c. According to this embodiment of this application, the first SSB and the first RO resource meet the following relationship: $(T_{RO}-T_{SSB\#k})$ mod $(N*T_{period})≤T_{threshold}$. The first SSB can be associated with only an RO resource in SFN#0, and the first SSB cannot be associated with an RO resource in SFN#32, so that the terminal device can determine the RO resource for the terminal device, to reduce overheads of the terminal device.

In some embodiments of this application, determining the first RO resource associated with the first SSB includes the following steps:

A1: determining, based on an association relationship between the N rounds of SSB transmissions and M RO resource groups, an RO resource group associated with the $i^{th}$ round of SSB transmission, where M is an integer; and

A2: determining the first RO resource based on the RO resource group associated with the $i^{th}$ round of SSB transmission.

By grouping SSBs and RO resources, one group of SSBs corresponds to one round of SSB transmission, and each group of SSBs has a fixed relationship with a corresponding group of RO resources, so that the RO resources have a valid association with the SSBs. A quantity of rounds of time division multiplexing sweeping is N. SSBs and RO resources are grouped. There are N groups of SSBs. All SSBs in a first round are the first group of SSBs, all SSBs in a second round are the second group of SSBs, ..., and so on, and all SSBs in an $N^{th}$ round are an $N^{th}$ group. Each group of SSBs corresponds to one or more fixed groups of RO resources. There are M groups of RO resources, where both N and M are integers. For example, N is equal to M, or N is less than M. For example, N is equal to M. The first group of SSBs corresponds to a first group of RO resources, the second group of SSBs corresponds to a second group of RO resources, ..., and the $N^{th}$ round of SSBs corresponds to an $N^{th}$ group of RO resources.

For example, when a quantity of SSBs is 128, and an SSB periodicity is 320 ms, it takes 640 ms to sweep 256 SSBs that are required for coverage. In other words, the network device performs two rounds of SSB sweeping. 128 SSBs in the first round are the first group of SSBs, and 128 SSBs in the second round are the second group of SSBs. Different groups of SSBs correspond to different RO resource groups, and each group of SSBs corresponds to a fixed RO resource group.

For example, the terminal device determines that the first SSB is currently swept, where the first SSB belongs to the $i^{th}$ round of SSB transmission. The terminal device determines, based on the association relationship between the N rounds of SSB transmissions and the M RO resource groups, an RO resource group associated with the $i^{th}$ round of SSB transmission. Then, the terminal device determines the first RO resource based on the RO resource group associated with the $i^{th}$ round of SSB transmission. In other words, the first RO resource associated with the first SSB belongs to the RO resource group associated with the $i^{th}$ round of SSB transmission. Because different rounds of SSB transmissions are associated with different RO resource groups, the terminal device can determine the RO resource for the terminal device, to reduce overheads of the terminal device.

Further, in some embodiments of this application, in addition to performing the foregoing steps, the RO determining method provided in this embodiment of this application further includes the following step:

B1: determining, by using the following calculation formula, the $i^{th}$ round of SSB transmission to which the first SSB belongs:

$$\lfloor\frac{T_{SSB}}{T_{period}}\rfloor= i - 1, \text{ or } \lceil\frac{T_{SSB}}{T_{period}}\rceil= i.$$

i represents the $i^{th}$ round of SSB transmission in the N rounds of SSB transmissions.

$T_{SSB}$ represents a time unit in which the first SSB is located.

$T_{period}$ represents the SSB periodicity of the $i^{th}$ round of SSB transmission, or the association period between the SSB in the $i^{th}$ round of SSB transmission and the RO resource. $\lfloor\frac{T_{SSB}}{T_{period}}\rfloor$ represents a floor operation on $\frac{T_{SSB}}{T_{period}}$, and $\lceil\frac{T_{SSB}}{T_{period}}\rceil$ represents a ceiling operation on $\frac{T_{SSB}}{T_{period}}$, where ⌊⌋ represents a floor operation, or may be represented as a period floor function.

By using $\lfloor\frac{T_{SSB}}{T_{period}}\rfloor= i - 1$ or $\lceil\frac{T_{SSB}}{T_{period}}\rceil= i$, i can be calculated, and the $i^{th}$ round of SSB transmission to which the first SSB belongs is determined.

For example, if i is equal to 0, the first SSB belongs to the first group of SSBs; or if i is equal to 1, the first SSB belongs to the second group of SSBs.

It may be understood that the foregoing steps A1, A2, and B1 may be specifically performed by the terminal device, or may be performed by the network device. This is not limited herein.

It can be learned from the foregoing examples of steps A1, A2, and B1 that in this embodiment of this application, by grouping SSBs and RO resources, each group of SSBs has a fixed relationship with a corresponding group of RO resources, so that the RO resources have a valid association with the SSBs. Alternatively, a valid RO resource associated with an SSB may be determined through calculation according to the foregoing calculation formula.

In some embodiments of this application, the network device may further deliver, to the terminal device, a quantity N of rounds of SSB transmissions. In this way, the terminal device can determine the quantity of rounds of SSB sweeping, so that the terminal device determines, based on the value of N, the first RO resource associated with the first SSB.

In some embodiments of this application, RO resources included in different RO resource groups in the M RO resource groups are different in at least one configuration parameter.

Specifically, there is the association relationship between the N rounds of SSB transmissions and the M RO resource groups, and RO resources that belong to different RO resource groups in the M RO resource groups are different in at least one configuration parameter, so that an RO resource group to which an RO resource belongs can be determined based on the RO resource with a distinctive configuration parameter. One RO resource group may also be referred to as a set of RO resources. A configuration parameter of the RO resource may include at least one of the following: a PRACH configuration period, a period of the RO resource, a PRACH format, a quantity of slots occupied by the RO resource, a quantity of symbols occupied by the RO resource, a start time position of mapping an SSB to the RO resource, or the like. Configuration information of different sets of RO resources may be different. For example, a start offset of an RO resource relative to an SSB, a PRACH format, a quantity of slots occupied by the RO resource, a quantity of symbols occupied by the RO resource, or the like may be different.

For example, in this embodiment of this application, a plurality of sets of RO resources are configured for mapping, and different sets of RO resources correspond to different groups of SSBs. It is determined, based on the quantity N of rounds of SSB transmissions, that a quantity of configured sets of RO resources is M. For example, N is equal to M, all SSBs in the first round correspond to a first set of RO resources, and all SSBs in the second round correspond to a second set of RO resources. The rest can be deduced by analogy.

For example, when a quantity of SSBs is 128, and an SSB periodicity is 320 ms, it takes 640 ms to sweep 256 SSBs that are required for coverage. In other words, the network device performs two rounds of SSB sweeping. 128 SSBs in the first round are the first group of SSBs, and 128 SSBs in the second round are the second group of SSBs. An SSB in the first group corresponds to the first set of RO resources, an SSB in the second group corresponds to the second set of RO resources, and configuration parameters of the first set of RO resources and the second set of RO resources are different.

In some embodiments of this application, a configuration parameter used to determine the association relationship between the N rounds of SSB transmissions and the M RO resource groups is carried in system information.

Specifically, the network device determines the configuration parameter used to determine the association relationship between the N rounds of SSB transmissions and the M RO resource groups, and then sends the configuration parameter to the terminal device by using the system information, so that the terminal device determines the association relationship between the N rounds of SSB transmissions and the M RO resource groups based on the received configuration parameter.

For example, the network device determines a quantity M of configured sets of RO resources based on the quantity N of rounds of SSB transmissions. The system information may be specifically a system information block 1 (SIB1). The network device broadcasts, by using the SIB1, the configuration parameter used to determine the association relationship between the N rounds of SSB transmissions and the M RO resource groups. The terminal device determines, based on the quantity N of rounds of SSB transmissions carried in the SIB1 and/or RACH resource configuration information configured in the SIB1, that the M RO resources are configured for a current cell. Specifically, the network device may configure the RO resource by using RACH-Config in the SIB1.

It can be learned from the foregoing example description that, in this embodiment of this application, the plurality of sets of RO resources are configured for mapping, different sets of RO resources correspond to different groups of SSBs, and N rounds of SSBs in time division multiplexing each have a unique corresponding RO resource. This avoids a problem such as an increase in access overheads of the terminal device caused by confusion that the N rounds of SSBs correspond to a same RO resource. UE can identify a valid RO resource corresponding to the first SSB, thereby reducing access overheads and power consumption of the terminal device.

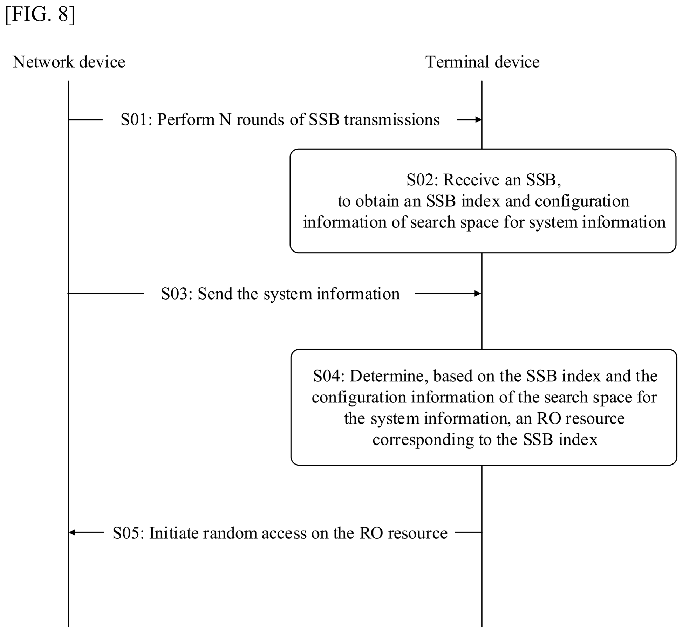

FIG. 8 is a diagram of signaling interaction between a base station and a terminal according to an embodiment of this application. The signaling interaction mainly includes the following steps.

Step S01: A network device performs N rounds of SSB transmissions.

The network device may send N rounds of SSBs separately in a time division multiplexing manner, and beams of the rounds of SSB cover different geographical areas.

Step S02: A terminal device receives the SSB sent by the network device, to obtain an SSB index and configuration information of search space for system information.

Step S03: The network device sends the system information.

The system information sent by the network device may include a system information block 1 (SIB1), satellite-related information (for example, SIB 19), and the like. The SIB1 carries a quantity N of rounds of SSB transmissions, an SSB periodicity, and the like. The SIB19 carries ephemeris information, and the like.

Step S04: The terminal device determines, based on the SSB index and the configuration information of the search space for system information, an RO resource corresponding to the SSB index.

The terminal device receives and parses the system information in a specific time-frequency domain based on the SSB index and the configuration information of the search space for the system information, to obtain PRACH configuration information, a quantity N of rounds of SSB transmissions, an SSB periodicity, and the like. The terminal device determines, based on the SSB index, the quantity N of rounds of SSB transmissions, the SSB periodicity, the PRACH configuration information, and the like, the RO resource corresponding to the SSB.

For example, each SSB has the system information SIB1 associated with the SSB and the system information SIB19 carrying the ephemeris information. As shown in FIG. 7b, a starting position of association between an SSB and an RO starts from a system frame 2, and an offset of 20 ms exists between the system frame 2 and a system frame 0. Each SSB may be mapped to a corresponding RO resource. For example, in FIG. 7b, one SSB is associated and mapped to one RO. In an RO configuration in FIG. 7b, four RO resources are configured for each system frame. In FIG. 7b, SSB#0 appears in the system frame 0 and a system frame 32, and RO#0 appears in the system frame 2 and a system frame 35. If a quantity of rounds of SSB transmissions is not limited, the terminal device of SSB#0 in the system frame 0 sends a PRACH access request in both RO#0 in the system frame 2 and RO#0 in the system frame 35. However, the network device does not receive, in RO#0 in the system frame 35, a PRACH in a beam direction of SSB#0 in the system frame 0. As a result, UE sends the access request on the RO resource on which the PRACH is not sent, causing power consumption of the UE.

After the selected RO resource is limited by using the quantity N of rounds of SSB transmissions, the terminal device of SSB#0 in the system frame 0 may determine that RO#0 in the system frame 2 is an RO resource corresponding to the current SSB, and RO#0 in the system frame 35 is not the RO resource corresponding to the current SSB. Therefore, the UE does not send the PRACH access request in RO#0 in the system frame 35, thereby reducing power consumption of the UE.

Step S05: The terminal device initiates random access on the RO resource.

For example, when a quantity of SSBs is 128, and an SSB periodicity is 320 ms, it takes 640 ms to sweep 256 SSBs that are required for coverage. In this case, moments of RO#0 includes 20 ms, 340 ms, 660 ms, ..., and 20+320*N. Moments of SSB#0 include 0 ms, 320 ms, ..., and 320*N. In this embodiment of this application, the UE uniquely determines the RO resource for the UE by using the quantity N of rounds of SSB transmissions.

Specifically, the terminal device receives SSB#0 of a $0^{th}$ ms, and performs determining based on the quantity N(N=2) of rounds of SSB transmissions. When the SSB periodicity=320 ms and N=2, for example, a third threshold is 320, $(T_{RO}-T_{SSB\#k})$ mod 640 ms$\leq$320. 20 mod 640$\leq$320: RO#0 at a $20^{th}$ ms is for the terminal device; 340 mod 640>320: RO#0 at a $340^{th}$ ms is not the RO for the terminal device.

The network device determines that RO#0 at a $20^{th}$ ms is an access resource of the UE in a beam direction of SSB#0 at the $0^{th}$ ms, and receives a PRACH of the UE in RO#0 at the $20^{th}$ ms in the beam direction of SSB#0 at the $0^{th}$ ms.

For different relationships between a mapping cycle and the SSB periodicity, the following further describes an association relationship between an SSB and an RO.

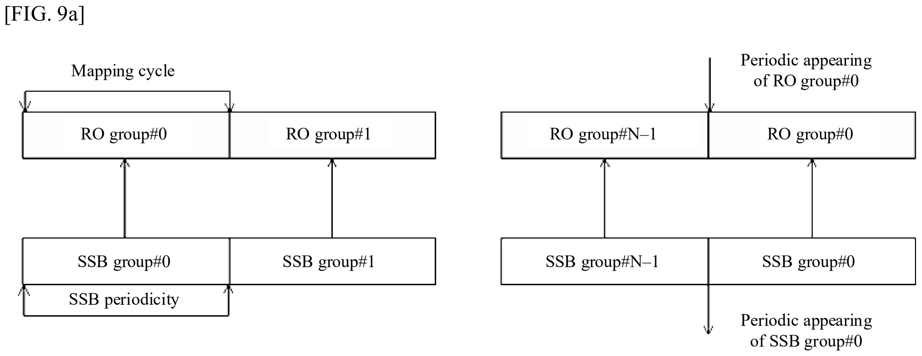

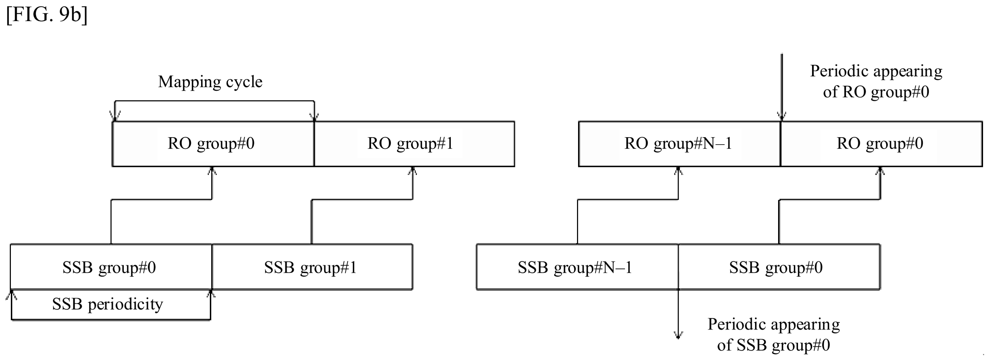

As shown in FIG. 9a and FIG. 9b, when mapping cycle=SSB periodicity, $T_{period}$=SSB periodicity. The SSB periodicity is T, a mapping cycle of an SSB completely mapped to an RO in one period is T, and a quantity of rounds of SSB sweeps is N. SSBs in N SSB periodicities are mapped to N groups of RO resources. An RO resource that meets $(T_{RO}-T_{SSB\#k})$ mod $(N*T_{period})\leq T_{threshold}$ is determined. $T_{period}$=T. In other words, it may be determined that an RO resource to which an SSB belonging to SSB group#0 is mapped is an RO in RO group#0, and the RO and the SSB meet the constraint of the foregoing calculation formula.

It may be understood that an offset exists at the start of SSB-to-RO mapping does not affect a rule of determining an RO. An RO resource group as a whole has an offset relative to an SSB group.

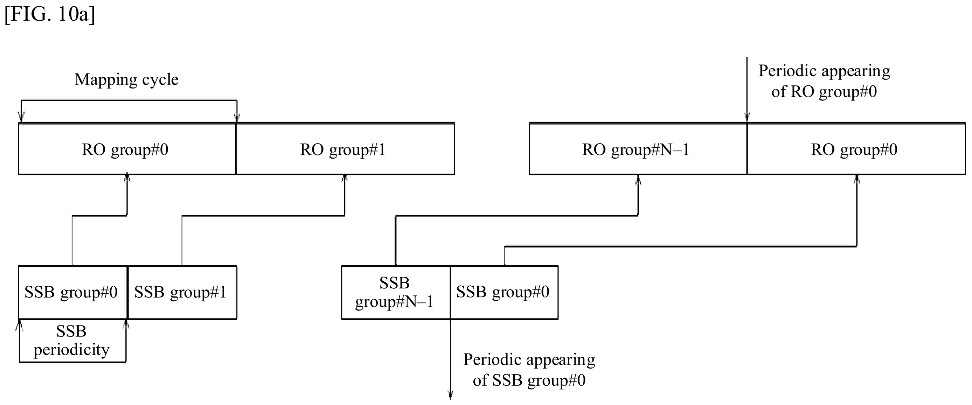

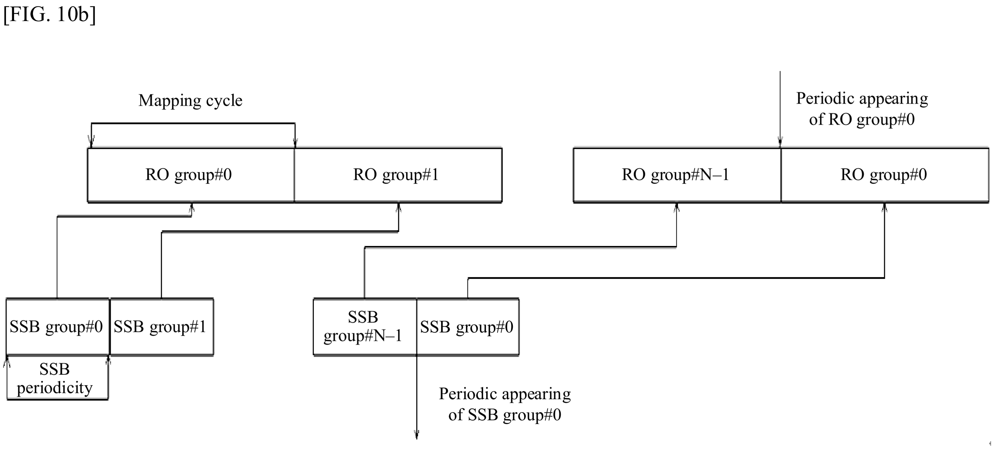

As shown in FIG. 10a and FIG. 10b, when mapping cycle>SSB periodicity, $T_{period}$=mapping cycle. The SSB periodicity is T, a mapping cycle of an SSB completely mapped to an RO in one period is 2T, and a quantity of rounds of SSB transmissions is N. SSBs in N SSB periodicities are mapped to N groups of RO resources. An RO resource that meets $(T_{RO}-T_{SSB\#k})$ mod $(N*T_{period})\leq T_{threshold}$ is determined. $T_{period}$=2T. In other words, it may be determined that an RO resource to which an SSB belonging to SSB group#0 is mapped is an RO in RO group#0, and the RO and the SSB meet the constraint of the foregoing calculation formula.

It may be understood that an offset exists at the start of SSB-to-RO mapping does not affect a rule of determining an RO. The RO resource group as a whole has an offset relative to the SSB group.

In some embodiments of this application, the network device sends N (that is, a quantity of rounds of SSB transmissions) and/or a value of the third threshold to the terminal device by using signaling. For example, the third threshold is equal to the SSB periodicity or the mapping cycle. When the third threshold is equal to the SSB periodicity, the network device delivers only the quantity N of rounds of SSB transmissions. When the third threshold is not equal to the SSB periodicity, the network device delivers the quantity N of rounds of SSB transmissions and the third threshold.

It can be learned from the foregoing example description that, in this embodiment of this application, the mapping relationship between the RO and the SSB is constrained, to distinguish between RO resources respectively corresponding to SSBs having a same index. This prevents the terminal device from sending a random access request on an RO resource that is not for the terminal device, which causes unnecessary power consumption and overheads.

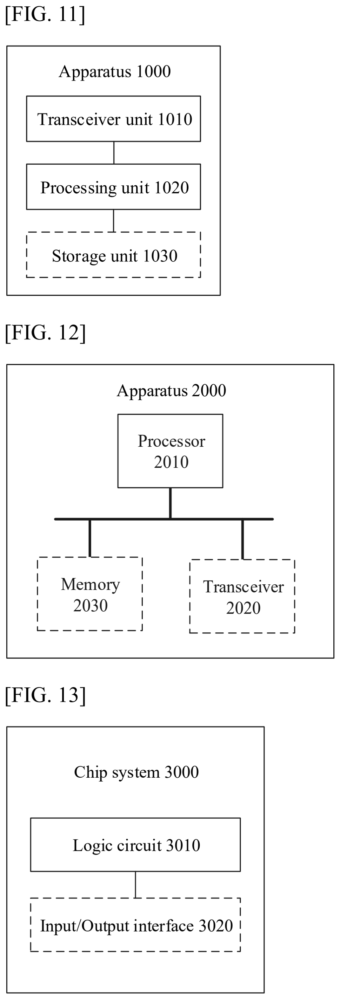

The foregoing has described the method provided in embodiments of this application in detail with reference to FIG. 5, FIG. 6, and FIG. 8. The following describes in detail communication apparatuses provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, details are not described herein again.

FIG. 11 is a block diagram of a communication apparatus 1000 according to an embodiment of this application. As shown in FIG. 6, the communication apparatus 1000 may include a transceiver unit 1010 and a processing unit 1020.

In a possible design, the communication apparatus 1000 may be the terminal device in the foregoing method embodiments, or may be a chip configured to implement a function of the terminal device in the foregoing method embodiments.

It should be understood that the communication apparatus 1000 may correspond to the terminal device in the method according to embodiments of this application, and the communication apparatus 1000 may include a unit configured to perform the method performed by the terminal device in the method in FIG. 8. In addition, the units in the communication apparatus 1000 and the foregoing other operations and/or functions are separately used to implement corresponding procedures of S02 and S04 in the method in FIG. 8. It should be understood that a specific process in which the units perform the foregoing corresponding steps is already described in detail in the foregoing method embodiment. For brevity, details are not described herein again.

In another possible design, the communication apparatus 1000 may be the network device in the foregoing method embodiments, or may be a chip configured to implement functions of the network device in the foregoing method embodiments.

It should be understood that the communication apparatus 1000 may correspond to the network device in the method according to embodiments of this application, and the communication apparatus 1000 may include a unit configured to perform the method performed by the network device in the method in FIG. 8. In addition, the units in the communication apparatus 1000 and the foregoing other operations and/or functions are separately used to implement corresponding procedures of S01 and S03 in the method in FIG. 8. It should be understood that a process in which the units perform the foregoing corresponding steps is already described in detail in the foregoing method embodiments. For brevity, details are not described herein again.

It should be further understood that the transceiver unit 1010 in the communication apparatus 1000 may correspond to a transceiver 2020 in a communication device 2000 shown in FIG. 12, and the processing unit 1020 in the communication apparatus 1000 may correspond to a processor 2010 in the communication device 2000 shown in FIG. 12.

It should be further understood that when the communication apparatus 1000 is a chip, the chip includes a transceiver unit. Optionally, the chip may further include a processing unit. The transceiver unit may be an input/output circuit or a communication interface. The processing unit may be a processor, a microprocessor, or an integrated circuit integrated on the chip.

The transceiver unit 1010 is configured to implement signal receiving and sending operations of the communication apparatus 1000, and the processing unit 1020 is configured to implement a signal processing operation of the communication apparatus 1000.

Optionally, the communication apparatus 1000 further includes a storage unit 1030, and the storage unit 1030 is configured to store instructions.

FIG. 12 is a block diagram of an apparatus 2000 according to an embodiment of this application. As shown in FIG. 12, the apparatus 2000 includes at least one processor 2010. The processor 2010 is coupled to a memory, and is configured to execute instructions stored in the memory, to perform the method in FIG. 8. Optionally, the apparatus 2000 further includes a transceiver 2020. The processor 2010 is coupled to the memory, and is configured to execute the instructions stored in the memory, to control the transceiver 2020 to send a signal and/or receive a signal. For example, the processor 2010 may control the transceiver 2020 to initiate a random access request. Optionally, the apparatus 2000 further includes a memory 2030, configured to store the instructions.

It should be understood that the processor 2010 and the memory 2030 may be integrated into one processing apparatus. The processor 2010 is configured to execute program code stored in the memory 2030 to implement the foregoing functions. During specific implementation, the memory 2030 may also be integrated into the processor 2010, or may be independent of the processor 2010.

It should be further understood that the transceiver 2020 may include a receiver (or referred to as a receiver machine) and a transmitter (or referred to as a transmitter machine). The transceiver 2020 may further include an antenna. There may be one or more antennas. The transceiver 2020 may further be a communication interface or an interface circuit.

When the apparatus 2000 is a chip, the chip includes a transceiver unit and a processing unit. The transceiver unit may be an input/output circuit or a communication interface. The processing unit may be a processor, a microprocessor, or an integrated circuit integrated on the chip.

FIG. 13 is a diagram of a chip system according to an embodiment of this application. The chip system herein may also be a system including a circuit. The chip system 3000 shown in FIG. 13 includes a logic circuit 3010 and an input/output interface (input/output interface) 3020. The logic circuit is configured to be coupled to an input interface, and transmit data through the input/output interface, to perform the method in FIG. 8.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access register, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, steps and logical block diagrams disclosed in embodiments of this application. The general-purpose processor may be a microprocessor, or the processor may be any conventional processor, or the like.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

Based on the methods provided in embodiments of this application, this application further provides a computer program product. The computer program product includes computer program code. When the computer program code is run on a computer, the computer is enabled to perform the methods in embodiments shown in FIG. 5, FIG. 7, and FIG. 8.

Based on the methods provided in embodiments of this application, this application further provides a computer-readable medium. The computer-readable medium stores program code. When the program code is run on a computer, the computer is enabled to perform the methods in embodiments shown in FIG. 5, FIG. 7, and FIG. 8.

According to the methods provided in embodiments of this application, this application further provides a system. The system includes the terminal device and the network device described above.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer instructions are loaded and executed on a computer, the procedure or functions according to the embodiments of this application are all or partially generated. The computer instructions may be stored in a computer-readable storage medium, or may be transmitted from one computer-readable information medium to another computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An access occasion RO determining method, comprising:

   determining a first synchronization signal block SSB in an $i^{th}$ round of SSB transmission in N rounds of SSB transmissions, wherein coverage areas of the $i^{th}$ round of SSB transmission and a $j^{th}$ round of SSB transmission in the N rounds of SSB transmissions are different, N, i, and j are integers, and i is not equal to j; and
   determining a first RO resource associated with the first SSB, wherein SSBs that have a same index in the $i^{th}$ round of SSB transmission and the $j^{th}$ round of SSB transmission are associated with different RO resources.

2. The method according to claim 1, wherein a time interval between the first RO resource and the first SSB is less than or equal to a first threshold; and the first threshold is determined based on a configuration of a network device, or is predefined in a protocol.

3. The method according to claim 2, wherein the first threshold comprises at least one of the following: an SSB periodicity of the $i^{th}$ round of SSB transmission, or an association period between an SSB in the $i^{th}$ round of SSB transmission and an RO resource.

4. The method according to any one of claims 1 to 3, wherein the first RO resource is a plurality of RO resources associated with the first SSB, and a time interval between each of the plurality of RO resources and the first SSB is less than or equal to a second threshold; and the second threshold is determined based on a configuration of the network device, or is predefined in a protocol.

5. The method according to claim 4, wherein the second threshold comprises at least one of the following: an integer multiple of the SSB periodicity of the $i^{th}$ round of SSB transmission, or an integer multiple of the association period between the SSB in the $i^{th}$ round of SSB transmission and the RO resource.

6. The method according to any one of claims 1 to 5, wherein the first RO resource is different from a second RO resource, the second RO resource is associated with a second SSB in the $j^{th}$ round of SSB transmission, and the first SSB and the second SSB have a same index.

7. The method according to any one of claims 1 to 6, wherein the first SSB and the first RO resource meet the following relationship:

$$(T_{RO} - T_{SSB\#k}) \bmod (N * T_{period}) \leq T_{threshold},$$

wherein

$T_{SSB\#k}$ represents a time unit in which the first SSB is located, k is an index of the first SSB, and k is an integer;
$T_{RO}$ represents a time unit in which the first RO resource is located;
$T_{RO} - T_{SSB\#k}$ represents a time interval between the first RO resource and the first SSB;
$T_{period}$ represents the SSB periodicity of the $i^{th}$ round of SSB transmission, or the association period between the SSB in the $i^{th}$ round of SSB transmission and the RO resource, and $N * T_{period}$ represents a sum of SSB periodicities of the N rounds of SSB transmissions, or a sum of association periods between SSBs and RO resources in the N rounds of SSB transmissions;
$T_{threshold}$ represents a third threshold, and the third threshold is determined based on a configuration of the network device, or is predefined in a protocol; and

- represents a subtraction operation, * represents a multiplication operation, mod represents a modulo operation, and $\leq$ represents being less than or equal to.

8. The method according to any one of claims 1 to 6, wherein determining the first RO resource associated with the first SSB comprises:

   determining, based on an association relationship between the N rounds of SSB transmissions and M RO resource groups, an RO resource group associated with the $i^{th}$ round of SSB transmission, wherein M is an integer; and determining the first RO resource based on the RO resource group associated with the $i^{th}$ round of SSB transmission.

9. The method according to claim 8, wherein the method further comprises:

   determining, by using the following calculation formula, the $i^{th}$ round of SSB transmission to which the first SSB belongs:

   $$\left\lfloor \frac{T_{SSB}}{T_{period}} \right\rfloor = i - 1, \text{ or } \left\lceil \frac{T_{SSB}}{T_{period}} \right\rceil = i,$$

   wherein
   i represents the $i^{th}$ round of SSB transmission in the N rounds of SSB transmissions;
   $T_{SSB}$ represents a time unit in which the first SSB is located;
   $T_{period}$ represents the SSB periodicity of the $i^{th}$ round of SSB transmission, or the association period between the SSB in the $i^{th}$ round of SSB transmission and the RO resource; and

   $\left\lfloor \frac{T_{SSB}}{T_{period}} \right\rfloor$ represents a floor operation on $\frac{T_{SSB}}{T_{period}}$, and $\left\lceil \frac{T_{SSB}}{T_{period}} \right\rceil$ represents a ceiling

   operation on $\frac{T_{SSB}}{T_{period}}$.

10. The method according to claim 8 or 9, wherein RO resources comprised in different RO resource groups in the M RO resource groups are different in at least one configuration parameter.

11. The method according to any one of claims 8 to 10, wherein a configuration parameter used to determine the association relationship between the N rounds of SSB transmissions and the M RO resource groups is carried in system information.

12. The method according to any one of claims 1 to 11, wherein a value of N is carried in the system information.

13. A communication apparatus, comprising at least one processor, wherein the at least one processor is configured to be coupled to a memory, and read and execute instructions in the memory, to implement the method according to any one of claims 1 to 12.

14. A computer-readable storage medium, wherein the computer-readable storage medium stores a computer program, and when the computer program is executed, the method according to any one of claims 1 to 12 is performed.

15. A computer program product comprising instructions, wherein when the computer program product is run on a computer, the computer is enabled to perform the method according to any one of claims 1 to 12.

[FIG. 1]

[FIG. 2]

[FIG. 3]

RAN

UE

Uu

Satellite
base station

SRI-based NG

NTN gateway

NG

CN

[FIG. 4a]

| SSB | | RO1 | RO2 | RO3 | RO4 |

[FIG. 4b]

| SSB1 | SSB2 | SSB3 | SSB4 | | RO |

[FIG. 4c]

SSB

SSB

...

SSB

| RO 1 | RO 2 | RO 3 | RO 4 | | RO 1 | RO 2 | RO 3 | RO 4 | | RO 1 | RO 2 | RO 3 | RO 4 |

PRACH configuration period

Association period between an SSB and an RO resource

[FIG. 5]

```
┌─────────────────────────────────────────────────────────────┐  ╱── 501
│  Determine a first synchronization signal block SSB in an iᵗʰ │
│  round of SSB transmission in N rounds of SSB transmissions,  │
│  where coverage areas of the iᵗʰ round of SSB transmission    │
│  and a jᵗʰ round of SSB transmission in the N rounds of SSB   │
│  transmissions are different                                  │
└─────────────────────────────────────────────────────────────┘
                            │
                            ▼
┌─────────────────────────────────────────────────────────────┐  ╱── 502
│  Determine a first RO resource associated with the first SSB, │
│  where SSBs that have a same index in the iᵗʰ round of SSB    │
│  transmission and the jᵗʰ round of SSB transmission are       │
│  associated with different RO resources                       │
└─────────────────────────────────────────────────────────────┘
```

[FIG. 6]

```
┌──────────────────┐                        ┌──────────────────┐
│  Network device  │                        │ Terminal device  │
└──────────────────┘                        └──────────────────┘
         │                                            │
         │   601: The network device performs         │
         ├────── N rounds of SSB transmissions ──────▶│
         │                                            │
         │                              ┌─────────────────────────────────┐
         │                              │ 603: The terminal device        │
         │                              │ receives a first SSB in an iᵗʰ   │
         │                              │ round of SSB transmission in     │
         │                              │ the N rounds of SSB transmissions│
┌─────────────────────────────────┐    └─────────────────────────────────┘
│ 602: The network device         │                 │
│ determines an RO resource       │                 │
│ associated with one or more SSBs │                 │
│ in the N rounds of SSB          │                 │
│ transmissions                   │                 │
└─────────────────────────────────┘                 │
         │                                            │
         │                              ┌─────────────────────────────────┐
         │                              │ 604: The terminal device        │
         │                              │ determines a first RO resource  │
         │                              │ associated with the first SSB,  │
         │                              │ where SSBs that have a same     │
         │                              │ index in the iᵗʰ round of SSB   │
         │                              │ transmission and a jᵗʰ round    │
         │                              │ of SSB transmission are         │
         │                              │ associated with different RO    │
         │                              │ resources                       │
         │                              └─────────────────────────────────┘
         │                                            │
```

[FIG. 7a]

SFN#2

RO#3

RO#2

RO#1

RO#0

Starting position of
an association
period

SFN#1

SIB19
SIB1
SIB19
SIB1

Offset between an
SSB and an RO=20
ms

SIB19
SIB1
SIB19
SIB1
SIB19
SIB1
SIB19
SIB1
SIB19
SIB1
SIB19#0
SIB1#0

SFN#0

SSB#6–7
SSB#4–5
SSB#2–3
SSB#0–1

gNB
UL

gNB
DL

[FIG. 7b]

SFN#34

RO#3
RO#2
RO#1
RO#0

SFN#33

RO#127
RO#126
RO#125
RO#124

SFN#32

RO#123
RO#122
RO#121
RO#120

SFN#2

RO#3
RO#2
RO#1
RO#0

Starting position
of an association
period

SFN#1

Offset between an SSB
and an RO=20 ms

SFN#0

SIB19
SIB1
SIB19
SIB1
SIB19
SIB1
SIB19
SIB1
SIB19
SIB1
SIB19
SIB1
SIB19
SIB1
SIB19#0
SIB1#0

SSB#6–7
SSB#4–5
SSB#2–3
SSB#0–1

gNB
UL

gNB
DL

[FIG. 7c]

SFN#33

RO#7
RO#6
RO#5
RO#4

SIB19
SIB1
SIB19
SIB1
SIB19
SIB1
SIB19
SIB1
SIB19
SIB1
SIB19
SIB1
SIB19
SIB1
SIB19#0
SIB1 #0

SFN#32

RO#3
RO#2
RO#1
RO#0

SSB#6-7
SSB#4-5
SSB#2-3
SSB#0-1

SFN#31

RO#127
RO#126
RO#125
RO#124

⋮                    ⋮

SFN#2

RO#11
RO#10
RO#9
RO#8

SFN#1

RO#7
RO#6
RO#5
RO#4

SIB19
SIB1
SIB19
SIB1
SIB19
SIB1
SIB19
SIB1
SIB19
SIB1
SIB19
SIB1
SIB19#0
SIB1 #0

SFN#0

RO#3
RO#2
RO#1
RO#0

SSB#6-7
SSB#4-5
SSB#2-3
SSB#0-1

Starting position of an
association period
Offset between an SSB
and an RO=0 ms

gNB
UL

gNB
DL

[FIG. 8]

Network device                                            Terminal device

S01: Perform N rounds of SSB transmissions →

S02: Receive an SSB,
to obtain an SSB index and configuration
information of search space for system information

S03: Send the system information →

S04: Determine, based on the SSB index and the
configuration information of the search space for
the system information, an RO resource
corresponding to the SSB index

S05: Initiate random access on the RO resource

[FIG. 9a]

Mapping cycle

RO group#0 | RO group#1

SSB group#0 | SSB group#1

SSB periodicity

Periodic appearing of RO group#0

RO group#N−1 | RO group#0

SSB group#N−1 | SSB group#0

Periodic appearing of SSB group#0

[FIG. 9b]

[FIG. 10a]

Mapping cycle

Periodic appearing
of RO group#0

| RO group#0 | RO group#1 | | RO group#N−1 | RO group#0 |

| SSB group#0 | SSB group#1 | | SSB group#N−1 | SSB group#0 |

SSB
periodicity

Periodic appearing
of SSB group#0

EP 4 709 024 A1

[FIG. 10b]

[FIG. 11]

Apparatus 1000

Transceiver unit 1010

Processing unit 1020

Storage unit 1030

[FIG. 12]

Apparatus 2000

Processor
2010

Memory
2030

Transceiver
2020

[FIG. 13]

Chip system 3000

Logic circuit 3010

Input/Output interface 3020

## INTERNATIONAL SEARCH REPORT

| | |
|---|---|
| International application No.<br><br>**PCT/CN2024/080665** | |

### A. CLASSIFICATION OF SUBJECT MATTER

H04W74/0838(2024.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, USTXT, CNKI, 3GPP: 同步信号块, 物理广播信道块, 范围, 区域, 位置, 地区, 方向, 不同, 接入, 机会, 时机, 资源, 时域, 时隙, 频率, 索引, 相同, 同一, 重复, synchronization signal block, physical broadcast channel block, area, range, location, position, direction, different, access, occasion, resource, time, frequency, index, same, repeat

### C. DOCUMENTS CONSIDERED TO BE RELEVANT

| Category* | Citation of document, with indication, where appropriate, of the relevant passages | Relevant to claim No. |
|---|---|---|
| X | CN 116133146 A (HUAWEI TECHNOLOGIES CO., LTD.) 16 May 2023 (2023-05-16)<br>description, paragraphs [0251]-[0323], [0451]-[0458], [0474], and [0476] | 1-15 |
| A | CN 109151905 A (SPREADTRUM COMMUNICATIONS (SHANGHAI) CO., LTD.) 04 January 2019 (2019-01-04)<br>entire document | 1-15 |
| A | CN 116073967 A (BEIJING UNISOC COMMUNICATION TECHNOLOGY CO., LTD.) 05 May 2023 (2023-05-05)<br>entire document | 1-15 |
| A | WO 2023030654 A1 (NOKIA TECHNOLOGIES OY) 09 March 2023 (2023-03-09)<br>entire document | 1-15 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **26 April 2024** | **09 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080665**

| Patent document cited in search report | | | Publication date (day/month/year) | Patent family member(s) | | | Publication date (day/month/year) |
|---|---|---|---|---|---|---|---|
| CN | 116133146 | A | 16 May 2023 | WO | 2023082920 | A1 | 19 May 2023 |
| CN | 109151905 | A | 04 January 2019 | US | 2018368186 | A1 | 20 December 2018 |
| | | | | US | 10595345 | B2 | 17 March 2020 |
| CN | 116073967 | A | 05 May 2023 | WO | 2023071843 | A1 | 04 May 2023 |
| WO | 2023030654 | A1 | 09 March 2023 | | None | | |

Form PCT/ISA/210 (patent family annex) (July 2022)

**REFERENCES CITED IN THE DESCRIPTION**

**Patent documents cited in the description**

- CN 202310581489